# EUROPEAN PATENT APPLICATION

(11) **EP 4 459 744 A1**
(43) Date of publication of application: **06.11.2024**
(21) Application number: 22895676.9
(22) Date of filing: 17.11.2022
(51) Int. Cl.: H01M 10/653, H01M 10/613, H01M 10/651, H01M 10/6556, H01M 10/6568

(54) **COOLING FLOOR MEMBER**

(30) Priority: 17.11.2021 JP 2021187259
(71) Applicant: NIPPON STEEL CORPORATION, Chiyoda-ku Tokyo 100-8071 (JP)
(72) Inventor: MIYAKE, Kyohei, Tokyo 100-8071 (JP); UEDA, Daichi, Tokyo 100-8071 (JP); UEDA, Kohei, Tokyo 100-8071 (JP); SAKIYAMA, Tatsuya, Tokyo 100-8071 (JP); YAMAZAKI, Shohei, Tokyo 100-8071 (JP)
(74) Representative: Vossius & Partner Patentanwälte Rechtsanwälte mbB
(86) International application number: PCT/JP2022/042727
(87) International publication number: WO 2023/090395

(57) **Abstract**

A cooling floor member (100A) cools a battery cell and includes a metal floor base material (101), a flat sheet-like metal floor sheet (102), and a partition member (105) that is a thermoplastic resin composition (106), and a region surrounded by the metal floor base material (101), the flat sheet-like metal floor sheet (102), and the partition member (105) is a cooling liquid channel (104) through which a cooling liquid flows. The metal floor base material (101) or the flat sheet-like metal floor sheet (102) or a combination thereof has a polypropylene layer (160) or a polycarbonate unit-containing polyurethane layer (161). The metal floor base material (101) or the flat sheet-like metal floor sheet (102) or a combination thereof is joined to the partition member (105) via a compatible layer (140) between the polypropylene layer (160) or the polycarbonate unit-containing polyurethane layer (161) and the thermoplastic resin composition (106).

## Description

### [Technical Field of the Invention]

The present disclosure relates to a cooling floor member. The present application claims priority on Japanese Patent Application No. 2021-187259 filed on November 17, 2021, the content of which is incorporated herein by reference.

### [Related Art]

In recent years, fuel consumption regulations have been tightened all over the world, and the vehicle industry has been promoting the use of electricity. In electric vehicles (EVs) and hybrid electric vehicles (HEVs), there is an increasing need for batteries having a large capacity and capable of coping with fast charging for an extended cruising distance. Depending on usage conditions, fast-charging batteries (batteries) self-heat and their operating temperature ranges are determined. When the temperature becomes high, the capacity of a cell constituting a battery significantly decreases due to a change in chemical substances in the cell and the like. Therefore, an operating upper limit temperature is specified. Therefore, in many cases, batteries have a cooling system so that the temperature of the battery does not exceed an upper limit temperature, and many current EV vehicles and HEV vehicles adopt a cooling method by air cooling. Meanwhile, it is necessary to efficiently suppress an increase in battery temperature, and thus it has been considered to adopt a water cooling structure in a cooling system with an increase in capacity. In addition, in order to increase the cruising distance of a vehicle, it is required to increase the number of battery cells and reduce the weight of the cooling system.

As a water cooling structure of a cooling system, for example, Patent Document 1 discloses a panel constituted by joining two plates having a channel inside to face each other. The two plates have the same shape divided by a plane passing through the center of the channel. A cooling target is cooled by allowing a cooling medium to flow through the channel formed inside the panel. The channel meanders in the panel.

### [Prior Art Document]

### [Patent Document]

[Patent Document 1] Japanese Patent No. 6064730

### [Disclosure of the Invention]

### [Problems to be Solved by the Invention]

In a case of the configuration of Patent Document 1, creating the channel inside the panel is complicated and a large manufacturing cost is required. That is, the channel meandering inside the panel is formed by, for example, performing grooving on the inner surface of the plate. In addition, since the two plates have the same shape, it is necessary to perform grooving on each of the two plates. The plate needs to have a thickness for grooving, which increases the weight of the panel. In addition, all ranges without a formed channel are joined through brazing, but there is a concern that a cooling medium (water) may leak in a case where the brazing is not sufficient. In a case where the cooling medium leaks, there is a concern that the water may collect in a battery pack that houses a battery cell and a cooling system and the battery cell may be submerged in the battery pack.

In a case of the adhesive joining described in Patent Document 1, an interface is present between the adhesive and the resin, and a problem occurs in that the adhesion strength decreases due to the intrusion of cooling water into the boundary portion.

The present disclosure has been contrived in view of the above-described circumstances, and an object thereof is to provide a cooling floor member that is easy to manufacture, can suppress leakage of a cooling medium, is lightweight, and has excellent cooling efficiency.

### [Means for Solving the Problem]

In order to solve the above-described problems, the present inventors have conducted intensive studies on a cooling floor member that is easy to manufacture, suppresses leakage of a cooling medium, is lightweight, and has excellent cooling efficiency. As a result, the present inventors have found that in a case where a partition member (insert) is inserted between metal thin sheets coated with an adhesive resin film, a cooling medium is allowed to flow between the metal thin sheets and in the space formed by the partition member, and a compatible layer is formed between the metal thin sheets and the partition member, it is possible to obtain a cooling floor member that is easy to manufacture without working such as grooving or press working, can suppress leakage of a cooling medium, is lightweight, and has excellent cooling efficiency.

The present disclosure has been contrived in view of the above findings. The gist of the present disclosure adopts the following solutions.
(1) A cooling floor member according to one embodiment of the present disclosure is
   a cooling floor member that cools a battery cell placed above, including:
   a metal floor base material;
   a flat sheet-like metal floor sheet that is disposed to face the metal floor base material and has an outer surface in contact with the battery cell; and
   a partition member that is disposed between the metal floor base material and the flat sheet-like metal floor sheet and is a thermoplastic resin composition,
   in which a region surrounded by the metal floor base material, the flat sheet-like metal floor sheet, and the partition member is a cooling liquid channel through which a cooling liquid flows,
   the metal floor base material or the flat sheet-like metal floor sheet or a combination thereof has a polypropylene layer containing acid-modified polypropylene or a polycarbonate unit-containing polyurethane layer including a polycarbonate unit and polyurethane,
   a film thickness of the polypropylene layer or the polycarbonate unit-containing polyurethane layer is 0.2 µm or more, and
   the metal floor base material or the flat sheet-like metal floor sheet or a combination thereof is joined to the partition member via a compatible layer between the polypropylene layer or the polycarbonate unit-containing polyurethane layer and the thermoplastic resin composition.

According to the cooling floor member having the above-described configuration, a structure in which the partition member is disposed between the metal floor base material and the flat sheet-like metal floor sheet to form the compatible layer is provided, and thus working such as grooving and press working is not required. With such a configuration, the leakage of the cooling medium can be suppressed, and weight reduction can be achieved. Furthermore, since the metal floor sheet whose outer surface is in contact with the battery cell has a flat sheet shape, the battery cell and the cooling floor member can be brought into close contact with each other. In addition, the battery cells can be densely installed without a gap therebetween on the upper surface of the cooling floor member, and thus the battery cells can be efficiently cooled. Furthermore, in the cooling floor member, the metal floor base material and the flat sheet-like metal floor sheet have a polypropylene layer or a polycarbonate unit-containing polyurethane layer, and these layers and the partition member are adhered to each other by thermocompression bonding. Therefore, it is possible to reduce an adhesive for adhesion and steps such as sealing. That is, the manufacturing becomes easier.

(2) In (1), the following configuration may be adopted:
the metal floor base material or the flat sheet-like metal floor sheet or a combination thereof has the polypropylene layer, and the partition member is any one of a polyethylene-based resin composition and a polypropylene-based resin composition.

(3) In (1), the following configuration may be adopted:
the metal floor base material or the flat sheet-like metal floor sheet or a combination thereof has the polycarbonate unit-containing polyurethane layer, and the partition member is any one of an acrylonitrile-butadiene-styrene-based resin composition, a polyethylene terephthalate-based resin composition, a polycarbonate-based resin composition, a polyamide-based resin composition, a polyphenylene sulfide-based resin composition, a polyvinyl chloride-based resin composition, a methacrylic acid-based resin composition, and a polyacetal-based resin composition.

(4) In any one of (1) to (3), the following configuration may be adopted: an outer peripheral edge of the metal floor base material and an outer peripheral edge of the flat sheet-like metal floor sheet are directly and continuously joined to each other.

(5) In any one of (1) to (3), the following configuration may be adopted: the metal floor base material and the flat sheet-like metal floor sheet are steels.

(6) In any one of (1) to (3), the following configuration may be adopted: the metal floor base material and the flat sheet-like metal floor sheet are zinc-plated steel sheets or aluminum-plated steel sheets.

(7) In any one of (1) to (3), the following configuration may be adopted:
a thickness of the compatible layer is 25 nm or more.

(8) In any one of (1) to (3), the following configuration may be adopted:
an edge portion of the compatible layer has burrs.

### [Effects of the Invention]

According to the present disclosure, it is possible to provide a cooling floor member that is easy to manufacture, can suppress leakage of a cooling medium, is lightweight, and has excellent cooling efficiency.

### [Brief Description of the Drawings]

FIG. 1 is an exploded perspective view showing an example of a schematic configuration of a battery pack to which a cooling floor member according to a first embodiment of the present disclosure is applied.
FIG. 2A is an exploded perspective view showing a schematic configuration of the cooling floor member according to the embodiment.
In FIG. 2B, (a) is a plan view of the cooling floor member according to the embodiment, (b) is a view of a cut end surface taken along the arrow A-A' of (a), and (c) is a cross-sectional view taken along the arrow a-a' of (b).
FIG. 3 is an explanatory view showing a cut end surface for showing a schematic configuration of a compatible layer of the cooling floor member according to the embodiment.
FIG. 4A shows exploded perspective views showing a schematic configuration of a cooling floor member according to a second embodiment of the present disclosure.
In FIG. 4B, (a) is a plan view of the cooling floor member according to the embodiment, (b) is a view of a cut end surface taken along the arrow B-B' of (a), and (c) is a cross-sectional view taken along the arrow b-b' of (b).
FIG. 5A is a view showing an example of a method of joining a metal floor base material and a flat sheet-like metal floor sheet to each other in a cooling floor member according to an embodiment of the present disclosure, and is a cross-sectional view of the cooling floor member.
FIG. 5B is a view showing an example of a method of joining a metal floor base material and a flat sheet-like metal floor sheet to each other in a cooling floor member according to an embodiment of the present disclosure, and is a cross-sectional view of the cooling floor member.
FIG. 5C is a view showing an example of a method of joining a metal floor base material and a flat sheet-like metal floor sheet to each other in a cooling floor member according to an embodiment of the present disclosure, and is a cross-sectional view of the cooling floor member.
FIG. 6 is an exploded perspective view showing an example of a schematic configuration of a battery case-integrated cooling channel according to a third embodiment of the present disclosure.

### [Embodiments of the Invention]

A cooling floor member according to each embodiment of the present disclosure will be described with reference to the drawings. In the following description, constituent elements common to the embodiments may be denoted by the same reference numerals, and duplicate description thereof may be omitted. However, the present disclosure is not limited to configuration disclosed in the present embodiment, and various modifications can be made without departing from the gist of the present disclosure. A numerical range represented by using "to" means a range including numerical values described before and after "to" as a lower limit and an upper limit. A numerical range represented by using "more than" or "less than" means a range in which the corresponding value is not included in the numerical range. In addition, "%" relating to the chemical composition means "mass%" unless particularly otherwise described.

In the following description, a longitudinal direction of the cooling floor member in a plan view will be set as an X direction, a width direction of the cooling floor member will be set as a Y direction, and a thickness direction of the cooling floor member will be set as a Z direction.

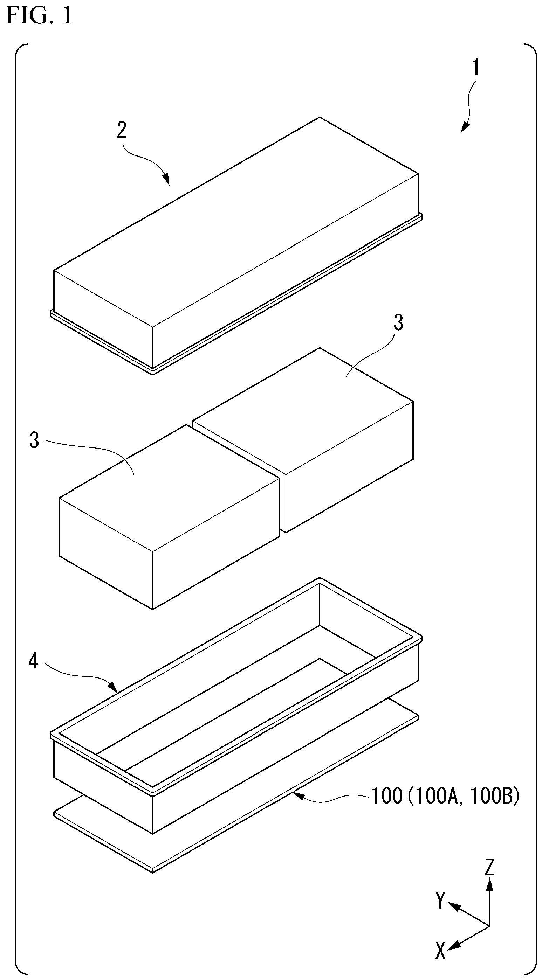

FIG. 1 is an exploded perspective view showing an example of a schematic configuration of a battery pack 1 to which a cooling floor member 100 according to each embodiment is applied.

As shown in FIG. 1, a battery pack 1 primarily includes an upper cover 2, a battery cell 3, a cooling floor member 100A, and a lower cover (battery case) 4. The upper cover 2 covers the battery cell 3 from above. The battery cell 3 is disposed in close contact with an upper surface of the cooling floor member 100. The lower cover 4 stores the cooling floor member 100 and the battery cell 3 from below.

In FIG. 1, the longitudinal direction (X direction), the width direction (Y direction), and the thickness direction (Z direction) of the cooling floor member 100 are the same as the longitudinal direction, the width direction, and the thickness direction of the battery pack 1. In FIG. 1, a positive side in the Z direction is an upper side, and a negative side in the Z direction is a lower side.

In FIG. 1, two battery cells 3 are disposed in the X direction, but the number of the battery cells 3 is not limited to two in the X direction. For example, three or more battery cells 3 may be disposed in the X direction or two or more battery cells 3 may be disposed in the Y direction. The number of the battery cells 3 may be one.

### [First Embodiment]

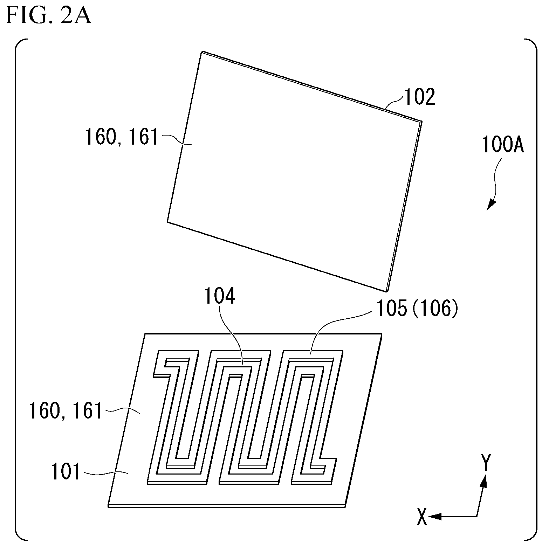

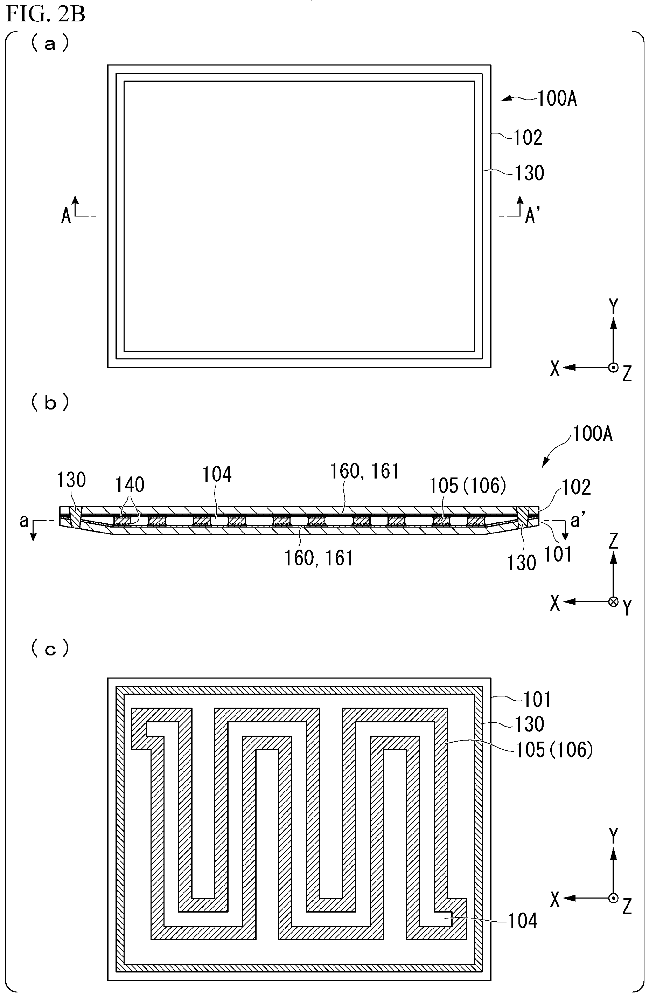

A cooling floor member 100A according to a first embodiment will be described with reference to FIGS. 2A and 2B.

FIG. 2A is an exploded perspective view showing a schematic configuration of the cooling floor member 100A according to the embodiment. FIG. 2B shows views showing a state in which a flat sheet-like metal floor sheet 102 is joined to a metal floor base material 101 in FIG. 2A.

A battery cell 3 is placed above the cooling floor member 100A. The cooling floor member 100A has the metal floor base material 101 and the flat sheet-like metal floor sheet 102. The flat sheet-like metal floor sheet 102 is disposed to face the metal floor base material 101, and an outer surface of the flat sheet-like metal floor sheet 102 is in contact with the battery cell 3. The cooling floor member 100A has a partition member (insert) 105 that is disposed between the metal floor base material 101 and the flat sheet-like metal floor sheet 102 and is a thermoplastic resin composition 106. A region surrounded by the metal floor base material 101, the flat sheet-like metal floor sheet 102, and the partition member 105 is a cooling liquid channel 104 through which a cooling liquid flows. A surface of the flat sheet-like metal floor sheet 102 that is on the opposite side to the metal floor base material 101 is in contact with the battery cell 3. With such a configuration, the cooling floor member 100A cools the battery cell 3 placed on the flat sheet-like metal floor sheet 102 by the cooling liquid flowing in the cooling liquid channel 104.

The metal floor base material 101 is, for example, an aluminum alloy material or a steel. In a case where an aluminum alloy material is used as the metal floor base material 101, the aluminum alloy material is lighter than a steel, but it is necessary to increase the sheet thickness. Therefore, the entire battery pack cannot be assembled in a compact manner. In addition, the aluminum alloy material is more expensive than the steel. From such a viewpoint, the metal floor base material 101 is preferably a steel. The metal floor base material 101 is more preferably a high strength steel that has excellent road surface interference properties and can effectively ensure a space by thinning. The high strength steel is a steel of 590 MPa grade or higher. The thickness of the metal floor base material 101 is 0.5 mm to 3.2 mm. The thickness is preferably 0.8 to 1.6 mm from the viewpoint of weight reduction and strength.

The flat sheet-like metal floor sheet 102 is particularly required to have cooling performance. The flat sheet-like metal floor sheet 102 is, for example, an aluminum alloy material or a steel. In a case where an aluminum alloy material is used as the flat sheet-like metal floor sheet 102, the aluminum alloy material is lighter than a steel, but it is necessary to increase the sheet thickness. Therefore, the entire battery pack cannot be assembled in a compact manner. In addition, the aluminum alloy material is more expensive than the steel. From such a viewpoint, the flat sheet-like metal floor sheet 102 is preferably a steel. The flat sheet-like metal floor sheet 102 is more preferably a high strength steel that has excellent cooling performance and can effectively ensure a space by thinning.

The thickness of the flat sheet-like metal floor sheet 102 is desirably small, but is 0.2 mm to 2.6 mm since damages are generated by contact with components due to vibration or the like. The thickness of the flat sheet-like metal floor sheet 102 is preferably 0.4 mm to 1.0 mm from the viewpoint of cooling performance, weight reduction, and strength.

The outer surface of the flat sheet-like metal floor sheet 102 has a flat sheet-like shape, that is, does not have an uneven shape. Since the outer surface of the flat sheet-like metal floor sheet 102 that is in contact with the battery cell 3 has a flat sheet-like shape, the battery cell 3 and the cooling floor member 100A can be brought into close contact with each other so that their entire surfaces are in full contact with each other. Further, since the outer surface of the flat sheet-like metal floor sheet 102 has a flat sheet-like shape, there are no restrictions on the placement of the battery cell 3. That is, the battery cells 3 can be densely installed without a gap therebetween on the upper surface of the cooling floor member 100A. Since the outer surface of the flat sheet-like metal floor sheet 102 has a flat sheet-like shape, the battery cell 3 can be efficiently cooled. In addition, since the flat sheet can be used without the need to perform special shaping, it is possible to reduce the working cost.

The metal floor base material 101 and the flat sheet-like metal floor sheet 102 are preferably the same metals from the viewpoint of corrosion resistance. In a case where the same metal is used for the metal floor base material 101 and the flat sheet-like metal floor sheet 102, it is possible to avoid a deterioration due to the contact corrosion of dissimilar metals occurring at a connection portion between the metal floor base material 101 and the flat sheet-like metal floor sheet 102, or a decrease in joining strength due to the melt joining of dissimilar metals.

The lower cover 4 and the flat sheet-like metal floor sheet 102 may be formed by integral forming.

Since the cooling floor member 100A is mounted on a bottom surface portion of a vehicle body in an environment where corrosion is likely to proceed, it is preferably a steel sheet having excellent corrosion resistance. The metal floor base material 101 and the flat sheet-like metal floor sheet 102 are preferably zinc (Zn)-plated steel sheets or aluminum (Al)-plated steel sheets. Examples of the zinc (Zn)-plated steel sheet include a Zn-0.2 mass% Al-plated steel sheet, a Zn-0.09 mass% Al-plated steel sheet, a Zn-6 mass% Al-3 mass% Mg-plated steel sheet, and a Zn-11 mass% Al-3 mass% Mg-0.2 mass% Si-plated steel sheet, and examples of the aluminum (Al)-plated steel sheet include an Al-9 mass% Si-plated steel sheet. A particularly preferable material among the zinc (Zn)-plated steel sheets is a zinc (Zn)-aluminum (Al)-magnesium (Mg)-based alloy-plated steel sheet.

The metal floor base material 101 or the flat sheet-like metal floor sheet 102 or a combination thereof has a polypropylene layer 160 containing acid-modified polypropylene or a polycarbonate unit-containing polyurethane layer 161 including a polycarbonate unit and polyurethane. Hereinafter, the polypropylene layer 160 containing acid-modified polypropylene or the polycarbonate unit-containing polyurethane layer 161 including a polycarbonate unit and polyurethane will also be referred to as a film layer. The polypropylene layer 160 or the polycarbonate unit-containing polyurethane layer 161 is provided on an inner surface side of the metal floor base material 101 or the flat sheet-like metal floor sheet 102 or a combination thereof.

A polypropylene layer 160 containing 40 mass% or more of acid-modified polypropylene or a polycarbonate unit-containing polyurethane layer 161 containing 15 to 80 mass% of a polycarbonate unit may be provided on both of the metal floor base material 101 and the flat sheet-like metal floor sheet 102.

The polypropylene layer 160 contains acid-modified polypropylene. The acid-modified polypropylene is polypropylene in which a carboxyl group or an anhydride group thereof is introduced into a constituent unit of the polypropylene. Since the acid-modified polypropylene has a functional group such as a carboxyl group that hydrogen-bonds to a shaped metallic material, it has sufficient adhesiveness to both of a shaped metallic material and a molded body of a thermoplastic resin composition. The acid-modified polypropylene may further have functional groups that hydrogen-bond to a shaped metallic material, other than a carboxyl group.

An epoxy resin, a phenolic resin, a polyolefin resin, and the like may be added to the polypropylene layer and the polycarbonate unit-containing polyurethane layer as necessary. In a case where these resins are added, it is possible to adjust physical properties of the film layer. In addition, wax such as polyethylene wax can also be added for the purpose of improving the workability of the film.

The polypropylene layer 160 and the polycarbonate unit-containing polyurethane layer 161 are special surface-modified steel sheets having excellent joinability to plastic. Since the polypropylene layer 160 and the polycarbonate unit-containing polyurethane layer 161 can be directly joined to plastic by thermocompression bonding without using an adhesive or screws, it is possible to save labor and reduce steps. In addition, the polypropylene layer 160 and the polycarbonate unit-containing polyurethane layer 161 have high dimensional accuracy.

As shown in FIGS. 2A and 2B, the polypropylene layer 160 or the polycarbonate unit-containing polyurethane layer 161 is applied to the inner surface side of the metal floor base material 101 and the inner surface side of the flat sheet-like metal floor sheet 102. The film thicknesses of the polypropylene layer 160 and the polycarbonate unit-containing polyurethane layer 161 are 0.2 µm or more. The film thicknesses of the polypropylene layer 160 and the polycarbonate unit-containing polyurethane layer 161 are 0.2 µm or more from the viewpoint that the polypropylene layer and the polycarbonate unit-containing polyurethane layer uniformly cover the surface of the shaped metallic material and the joining force between the coated, shaped metallic material and a molded body of the thermoplastic resin composition 106 is ensured. The film thicknesses of the polypropylene layer 160 and the polycarbonate unit-containing polyurethane layer 161 are preferably 2.0 µm or more. The film thicknesses of the polypropylene layer 160 and the polycarbonate unit-containing polyurethane layer 161 are preferably 10 µm or less. The adhesion to the thermoplastic resin composition 106 is improved by increasing the film thickness, but no significant improvement is observed in performance in a case where the film thickness is more than 10 µm, which is disadvantageous in terms of manufacturing and cost.

The partition member 105 to be described later is thermocompression-bonded between the flat sheet-like metal floor sheet 102 and the metal floor base material 101 coated with the polypropylene layer 160 or the polycarbonate unit-containing polyurethane layer 161. Since the partition member 105 is adhered to the polypropylene layer 160 or the polycarbonate unit-containing polyurethane layer 161 by thermocompression bonding, joining is possible without using an adhesive or screws and the manufacturing becomes easier.

A compatible layer 140 is provided between the polypropylene layer 160 or the polycarbonate unit-containing polyurethane layer 161 and the partition member 105. The compatible layer 140 will be described in detail later. FIG. 2B shows an aspect in which the polypropylene layer 160 or the polycarbonate unit-containing polyurethane layer 161 is provided on both of the metal floor base material 101 side and the flat sheet-like metal floor sheet 102 side, but the present disclosure is not limited thereto. The polypropylene layer 160 or the polycarbonate unit-containing polyurethane layer 161 may be provided on either one side. In addition, FIG. 2B shows an aspect in which the compatible layer 140 is provided on both of the metal floor base material 101 side and the flat sheet-like metal floor sheet 102 side, but the present disclosure is not limited thereto. The compatible layer 140 may be provided on either one side.

The battery cell 3 is placed above the cooling floor member 100A. The battery cell 3 is, for example, a lithium-ion battery. The battery cell 3 has a rectangular parallelepiped shape. A plurality of the battery cells 3 may be arranged in the X direction. A plurality of the battery cells 3 may be arranged in the Y direction. A plurality of the battery cells 3 may be stacked in the Z direction. The battery cell 3 is placed above the cooling floor member 100A, but there are cases other than the case where the battery cell 3 is placed directly above the cooling floor member 100A. For example, a case where a battery case (not shown) bundling and housing the battery cells 3 is placed above the cooling floor member 100A is also included. In this case, the battery case preferably has a thermal conductivity, thickness, or the like sufficient for heat conduction from the battery cells 3 to the cooling floor member 100A.

In a state in which the partition member 105 is disposed with the metal floor base material 101 and the flat sheet-like metal floor sheet 102 facing each other, the outer peripheral edge of the metal floor base material 101 and the outer peripheral edge of the flat sheet-like metal floor sheet 102 are joined to each other. Accordingly, the cooling liquid channel 104 is formed inside the cooling floor member 100A. FIG. 2A shows a state in which the metal floor base material 101 and the flat sheet-like metal floor sheet 102 are not joined to each other. FIG. 2B shows a state in which the metal floor base material 101 and the flat sheet-like metal floor sheet 102 are joined to each other.

A cooling medium (cooling liquid) flows in the cooling liquid channel 104.

In a case where the cooling liquid channel 104 has a large height (the length in the Z direction), it is possible to allow a large amount of the cooling medium to flow. However, from the viewpoint of weight reduction and cooling efficiency, the height is 1 mm to 10 mm. The height of the cooling liquid channel 104 is more preferably 1 mm to 5 mm.

The cooling liquid channel 104 is provided with a supply tube (not shown) that supplies a cooling medium and a discharge tube (not shown) that discharges the cooling medium. The supply tube and the discharge tube are preferably connected to the cooling liquid channel 104 via the metal floor base material 101. They are connected to substantially both ends of the cooling liquid channel 104, or disposed according to such a cooling design that the supply tube is positioned substantially in the middle of the cooling liquid channel 104 and a plurality of the discharge tubes are provided at both end portions of the cooling liquid channel 104. The cooling medium supplied from the supply tube flows through the cooling liquid channel 104, is discharged from the discharge tube, is cooled by a cooling device (not shown), and is then supplied again from the supply tube to the cooling liquid channel 104.

The cooling liquid channel 104 is formed by placing a plurality of the partition members 105 side by side, and by the length or route of the channel, the flowing direction of the cooling medium can be controlled to be uniform. With appropriate placement of the partition member 105, the battery cell 3 can be efficiently cooled.

The partition member 105 is the thermoplastic resin composition 106. In this case, the cooling liquid channel 104 is formed of the thermoplastic resin composition 106. The thermoplastic resin composition 106 is, for example, a polyethylene-based resin composition NIPOLON HARD 1000 (melting temperature 134°C; Tosoh Corporation).

The partition member 105 is easily made in accordance with a desired shape of the cooling liquid channel 104 and has a high degree of freedom in layout design. Furthermore, the shape of the channel is easily visually confirmed.

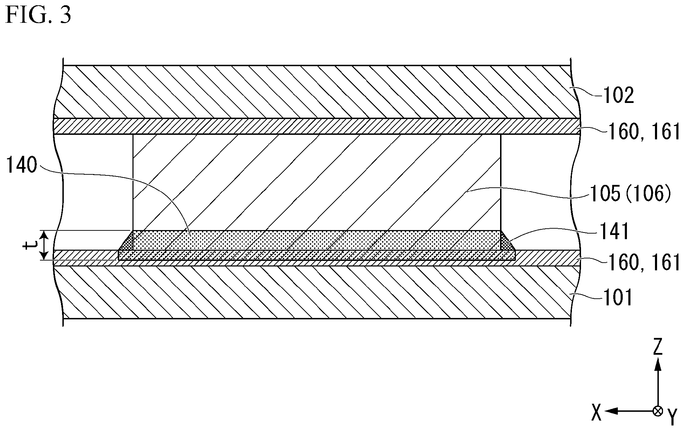

FIG. 3 is an explanatory view showing a cut end surface for showing a schematic configuration of the compatible layer 140 of the cooling floor member 100A according to the embodiment. The compatible layer 140 is formed between the metal floor base material 101 or the flat sheet-like metal floor sheet 102 or a combination thereof and the partition member 105. The metal floor base material 101 or the flat sheet-like metal floor sheet 102 or a combination thereof is joined to the partition member 105 via the compatible layer 140 between the polypropylene layer 160 or the polycarbonate unit-containing polyurethane layer 161 and the thermoplastic resin composition 106. The compatible layer 140 is formed over the metal floor base material 101 or the flat sheet-like metal floor sheet 102 or a combination thereof and the partition member 105. The compatible layer 140 is formed over the entire joining surface between the metal floor base material 101 or the flat sheet-like metal floor sheet 102 or a combination thereof and the partition member 105.

In the present embodiment, as shown in FIG. 3, the compatible layer 140 is formed between the metal floor base material 101 and the partition member 105. Specifically, the compatible layer 140 is formed between the polypropylene layer 160 or the polycarbonate unit-containing polyurethane layer 161 and the thermoplastic resin composition 106. The polypropylene layer 160 or the polycarbonate unit-containing polyurethane layer 161 and the thermoplastic resin composition 106 are adhered to each other through melting of the resins during thermocompression bonding and forming of the compatible layer 140.

The compatible layer 140 is formed along the X direction by applying a pressure to the polypropylene layer 160 or the polycarbonate unit-containing polyurethane layer 161 and the thermoplastic resin composition 106 during thermocompression bonding. The compatible layer 140 is formed to have a substantially constant thickness t (nm) along the joining surface between the polypropylene layer 160 or the polycarbonate unit-containing polyurethane layer 161 and the thermoplastic resin composition 106. The thickness t of the compatible layer 140 is a length (nm) in the Z direction.

The compatible layer is a layer obtained by melting resins by thermocompression bonding. In a case where the compatible layer 140 is formed, no interface is present between the polypropylene layer 160 or the polycarbonate unit-containing polyurethane layer 161 and the thermoplastic resin composition 106.

The thickness t of the compatible layer 140 can be changed by, for example, adjusting a time during which heat for thermocompression bonding is applied. The thickness t of the compatible layer 140 is increased by increasing the time during which heat for thermocompression bonding is applied. The thickness t of the compatible layer 140 is reduced by reducing the time during which heat for thermocompression bonding is applied. By providing the compatible layer 140, it is possible to suppress the intrusion of the cooling medium from between the polypropylene layer 160 or the polycarbonate unit-containing polyurethane layer 161 and the thermoplastic resin composition 106. The thickness t of the compatible layer 140 is preferably 25 nm or more. In a case where the thickness t of the compatible layer 140 is 25 nm or more, the resin molecular chain of the polypropylene layer 160 or the polycarbonate unit-containing polyurethane layer 161 and the molecular chain of the thermoplastic resin composition 106 are sufficiently entangled, and thus the adhesion is improved. The thickness t of the compatible layer 140 is more preferably 100 nm or more, and even more preferably 250 nm from the viewpoint of improving the adhesion.

In addition, the thickness t of the compatible layer 140 can also be adjusted by the resin types of the polypropylene layer 160, the polycarbonate unit-containing polyurethane layer 161, and the thermoplastic resin composition 106, the temperature during joining, or the like.

Regarding the thickness of the compatible layer 140, a cross section including the joining surface between the film layer and the thermoplastic resin composition 106 (partition member 105) is subjected to elemental analysis with an electron microanalyzer (EPMA), and from the thickness of the phase changing from the atomic composition specific to the resin layer to the atomic composition specific to thermoplastic resin composition 106, the thickness of the compatible layer 140 is calculated. Specifically, a cross section including the joining surface is subjected to elemental analysis with an electron microanalyzer (EPMA) to confirm the thickness of the compatible layer 140. As a pretreatment, the cross section including the joining surface is worked by Ar milling, and then subjected to converging ion beam (FIB) machining to produce a thin piece having a thickness of about 500 nm, and the obtained cross section is vapor-deposited with osmium. The EPMA analysis is performed using, for example, EPMA-8050G manufactured by Shimadzu Corporation with an acceleration voltage of 15 kV and an irradiation current of 100 nA. The atomic composition is confirmed by a line profile, and the thickness of the compatible layer 140 is calculated.

According to the cooling floor member 100A having the above-described configuration, a structure in which the partition member 105 is disposed between the metal floor base material 101 and the flat sheet-like metal floor sheet 102 is provided, and thus working such as grooving and press working is not required. Accordingly, the leakage of the cooling medium can be suppressed, and weight reduction can be achieved. Furthermore, since the metal floor sheet whose outer surface is in contact with the battery cell 3 has a flat sheet shape, the battery cell 3 and the cooling floor member 100A can be brought into close contact with each other. In addition, the battery cells 3 can be densely installed without a gap therebetween on the upper surface of the cooling floor member 100A, and thus the battery cells can be efficiently cooled. Furthermore, since the partition member 105 is thermocompression-bonded to the polypropylene layer 160 or the polycarbonate unit-containing polyurethane layer 161, joining is possible without using an adhesive or screws, and thus the manufacturing becomes easier.

The cooling floor member 100A has a configuration in which the compatible layer 140 is formed between the polypropylene layer 160 or the polycarbonate unit-containing polyurethane layer 161 and the thermoplastic resin composition 106. Since the cooling floor member 100A has the compatible layer 140, no interface is present between the polypropylene layer 160 or the polycarbonate unit-containing polyurethane layer 161 and the thermoplastic resin composition 106. Accordingly, the cooling medium does not intrude into the joining interface portion, and excellent adhesion strength durability is obtained.

Since the compatible layer 140 is formed during adhesion by thermocompression bonding, even in a case where a softening point of the polypropylene layer 160, the polycarbonate unit-containing polyurethane layer 161, or the thermoplastic resin composition 106 is reached, the polypropylene layer 160, the polycarbonate unit-containing polyurethane layer 161 and the thermoplastic resin composition 106 do not peel off immediately and keep a state having a certain level of adhesion. Thus, more excellent adhesion is obtained than in a case of using an adhesive.

Burrs 141 are preferably formed at an edge portion of the compatible layer 140 as shown in FIG. 3. The burrs 141 are generated when a pressure is applied to the partition member 105 during thermocompression bonding. The burrs 141 have a shape protruding toward the outside of the partition member 105 at the edge portion of the compatible layer 140.

The formation of the burrs 141 at the edge portion of the compatible layer 140 makes it possible to further suppress the intrusion of the cooling medium from between the polypropylene layer 160 or the polycarbonate unit-containing polyurethane layer 161 and the thermoplastic resin composition 106.

The presence or absence of the formation of the burrs 141 has an influence on the temperature and pressure of thermocompression bonding. FIG. 3 shows an example in which the burrs 141 are formed, but the present disclosure is not limited thereto and the burrs 141 may not be formed. Further, FIG. 3 shows an example in which the compatible layer 140 is formed between the metal floor base material 101 and the partition member 105. However, the present disclosure is not limited thereto and the compatible layer 140 may be formed between the flat sheet-like metal floor sheet 102 and the partition member 105. Alternatively, the compatible layer 140 may be formed between each of the metal floor base material 101 and the flat sheet-like metal floor sheet 102 and the partition member 105.

In the present embodiment, as shown in FIG. 2A, the partition member 105 is disposed so that the cooling liquid channel 104 meanders. In a case where the cooling medium flows along the partition member 105 disposed for meandering, the battery cell 3 can be more efficiently cooled.

As shown in FIGS. 2A and 2B, in the present embodiment, the cooling liquid channel 104 meanders so that the longitudinal direction is in the Y direction, but the meandering direction is not limited thereto. For example, the cooling liquid channel 104 may meander so that the longitudinal direction is in the X direction. Furthermore, the cooling liquid channel 104 may not meander.

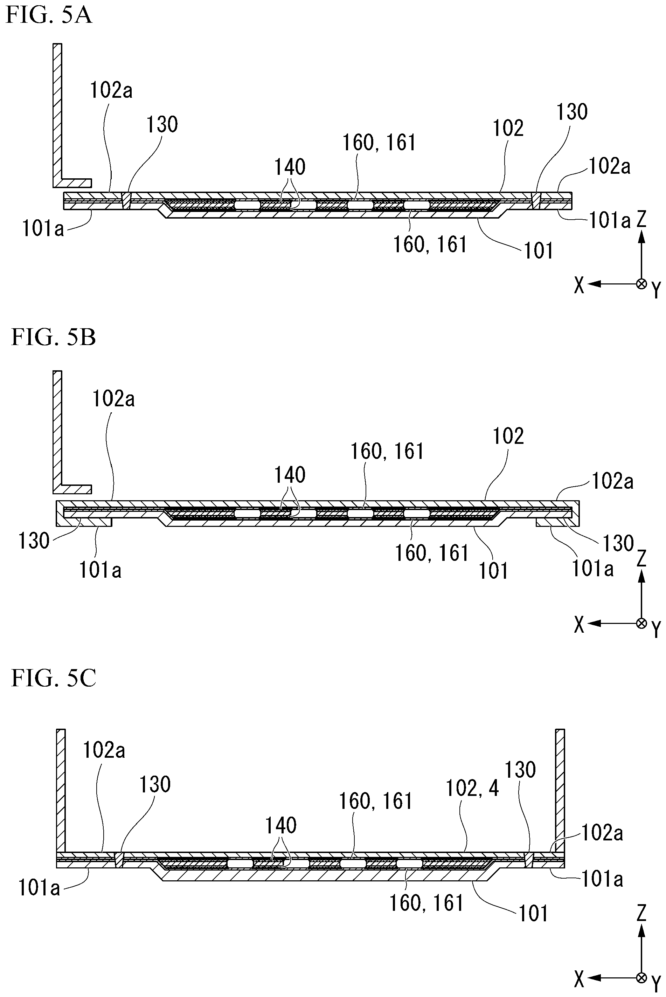

FIGS. 5A to 5C are views showing an example of a method of joining the metal floor base material 101 and the flat sheet-like metal floor sheet 102 to each other in the cooling floor member 100A according to the present embodiment, and are cross-sectional views of the cooling floor member 100A.

An outer peripheral edge 101a of the metal floor base material 101 and an outer peripheral edge 102a of the flat sheet-like metal floor sheet 102 are water-tightly joined (directly and continuously joined) to form a joining portion 130. The direct continuous joining is joining in which water is sealed so that no leakage occurs even under an applied water pressure. The outer peripheral edge 101a of the metal floor base material 101 and the outer peripheral edge 102a of the flat sheet-like metal floor sheet 102 are directly and continuously joined to each other, so that the cooling medium is prevented from leaking from the cooling floor member 100A.

The joining portion 130 is, for example, continuous melt joining, continuous pressure welding, or continuous seal joining. The outer peripheral edge 101a of the metal floor base material 101 and the outer peripheral edge 102a of the flat sheet-like metal floor sheet 102 are continuously joined to each other. The continuous melt joining is, for example, continuous fusion joining by resistance seam welding, laser welding, arc welding, plasma welding, or the like. The continuous pressure welding is solid phase joining by electromagnetic welding, ultrasonic joining, friction stir joining, or the like. The continuous seal joining is joining by seaming working (mechanical joining) such as seaming or seam-folding.

Although not shown in the drawings, the supply tube and the discharge tube are connected to the cooling liquid channel 104 via the metal floor base material 101, for example. Specifically, the supply tube and the discharge tube are directly and continuously joined to holes provided in the metal floor base material 101, and the supply tube and the discharge tube are connected to the cooling liquid channel 104 via the holes.

FIG. 5A shows a state in which the outer peripheral edge 101a of the metal floor base material 101 and the outer peripheral edge 102a of the flat sheet-like metal floor sheet 102 are welded. FIG. 5B shows a state in which the outer peripheral edge 101a of the metal floor base material 101 and the outer peripheral edge 102a of the flat sheet-like metal floor sheet 102 are seam-folded. The outer peripheral edge 101a of the metal floor base material 101 and the outer peripheral edge 102a of the flat sheet-like metal floor sheet 102 may be caulked. Further, as shown in FIG. 5C, the flat sheet-like metal floor sheet 102 may be the lower cover 4. The partition member 105 is inserted and joined between the lower cover 4 and the metal floor base material 101 to provide a cooling floor member. The surface of the lower cover 4 to be adhered to the partition member 105 preferably has the polypropylene layer 160 or the polycarbonate unit-containing polyurethane layer 161. In this case, the compatible layer 140 is provided as described above. FIGS. 5A, 5B, and 5C show an aspect in which the polypropylene layer 160 or the polycarbonate unit-containing polyurethane layer 161 is provided on both of the metal floor base material 101 side and the flat sheet-like metal floor sheet 102 side, but the present disclosure is not limited thereto. The polypropylene layer 160 or the polycarbonate unit-containing polyurethane layer 161 may be provided on either one side. In addition, FIGS. 5A, 5B, and 5C shows an aspect in which the compatible layer 140 is provided on both of the metal floor base material 101 side and the flat sheet-like metal floor sheet 102 side, but the present disclosure is not limited thereto. The compatible layer 140 may be provided on either one side.

By forming the joining portion 130 by direct continuous joining the outer peripheral edge 101a of the metal floor base material 101 and the outer peripheral edge 102a of the flat sheet-like metal floor sheet 102 to each other, the leakage of the cooling medium is prevented, and it is possible to avoid submerging of the battery cell 3 placed on the cooling floor member 100A. Even in a case where the cooling medium leaks, the leakage of the cooling medium can be improved only by repairing the outer peripheral edge 101a of the metal floor base material 101 and the outer peripheral edge 102a of the flat sheet-like metal floor sheet 102 owing to the continuous melt joining or continuous seal joining.

Preferably, the metal floor base material 101 or the flat sheet-like metal floor sheet 102 or a combination thereof has the polypropylene layer 160, and the partition member 105 is any one of a polyethylene (PE)-based resin composition and a polypropylene (PP)-based resin composition.

Preferably, the metal floor base material 101 or the flat sheet-like metal floor sheet 102 or a combination thereof has the polycarbonate unit-containing polyurethane layer 161, and the partition member 105 is any one of an acrylonitrile-butadiene-styrene (ABS)-based resin composition, a polyethylene terephthalate (PET)-based resin composition, a polycarbonate (PC)-based resin composition, a polyamide (PA)-based resin composition, a polyphenylene sulfide (PPS)-based resin composition, a polyvinyl chloride (PVC)-based resin composition, a methacrylic acid (PMMA)-based resin composition, and a polyacetal (POM)-based resin composition.

The thermoplastic resin composition 106 may contain an inorganic filler or the like from the viewpoints of a molding shrinkage ratio, material strength, mechanical strength, scratch resistance, or the like. The inorganic filler improves the stiffness of a molded body of the thermoplastic resin composition 106. The kind of the inorganic filler is not particularly limited, and a known substance can be used. Examples of the inorganic filler include fiber-based fillers such as glass fiber, carbon fiber, and aramid resin; powder fillers such as carbon black, calcium carbonate, calcium silicate, magnesium carbonate, silica, talc, glass, clay, lignin, mica, quartz powder, and glass sphere; and a crushed product of carbon fiber or aramid fiber. The amount of the inorganic filler to be blended is not particularly limited, but preferably in a range of 5 to 50 mass%. The inorganic fillers may be used alone or in combination of two or more kinds thereof.

The temperature at which an electrolytic solution used for the battery cell 3 mounted on the battery pack 1 deteriorates is generally said to be around 60°C. Therefore, the upper limit of the operating temperature of the cooling floor member 100A is set to 75°C in consideration of a temporary temperature rise of the battery cell. Since the partition member 105 that is the thermoplastic resin composition 106 has properties of being softened and deformed when heat is applied thereto, a resin that is not thermally deformed at a temperature lower than 75°C is preferably used for the thermoplastic resin composition 106. Preferably, thermoplastic resin composition 106 is a polyethylene (PE)-based resin composition, a polypropylene (PP)-based resin composition, a polyvinyl chloride (PVC)-based resin composition, a methacrylic acid (PMMA)-based resin composition, a polyacetal (POM)-based resin composition, an acrylonitrile-butadiene-styrene (ABS)-based resin composition, a polycarbonate (PC)-based resin composition, a polyamide (PA)-based resin composition, or a polyphenylene sulfide (PPS)-based resin composition.

In addition, since the thermal deformation temperatures of the polypropylene layer 160 and the polycarbonate unit-containing polyurethane layer 161 are 80°C to 100°C, the polypropylene layer 160 and the polycarbonate unit-containing polyurethane layer 161 do not deform by heat in the cooling floor member 100A.

In addition, since the polypropylene layer 160, the polycarbonate unit-containing polyurethane layer 161 and the thermoplastic resin composition 106 form a compatible layer during adhesion by thermocompression bonding, even in a case where the softening point of the polypropylene layer 160, the polycarbonate unit-containing polyurethane layer 161, or the thermoplastic resin composition 106 is reached temporarily, the polypropylene layer 160, the polycarbonate unit-containing polyurethane layer 161 and the thermoplastic resin composition 106 do not peel off immediately and keep a state having a certain level of adhesion. Thus, more excellent adhesion is obtained than in a case of using an adhesive.

In thermocompression bonding of the polypropylene layer 160, the polycarbonate unit-containing polyurethane layer 161 and the thermoplastic resin composition 106 to each other, the thermocompression bonding is preferably performed at a temperature at which of the polypropylene layer 160, the polycarbonate unit-containing polyurethane layer 161 or the thermoplastic resin composition 106 or a combination thereof is melted. Due to the melting of any one or both of the polypropylene layer 160, the polycarbonate unit-containing polyurethane layer 161 and the thermoplastic resin composition 106, a compatible layer is formed therebetween and the polypropylene layer 160, the polycarbonate unit-containing polyurethane layer 161 and the thermoplastic resin composition 106 are adhered to each other. The pressure conditions for when the thermocompression bonding is performed are not particularly limited. However, the polypropylene layer 160 or the polycarbonate unit-containing polyurethane layer 161 may be in contact with the thermoplastic resin composition 106, and a pressure may be applied so that the thermoplastic resin composition 106 is not deformed.

In a case where the polypropylene layer 160 or the polycarbonate unit-containing polyurethane layer 161 is adhered to the thermoplastic resin composition 106 by injection molding, it may be difficult to manufacture the cooling floor member. Actually, the cooling floor member is assumed to be manufactured on the order of meters (scale in units of meters). However, in a case where injection molding equipment that can deal with such a size is introduced, it is necessary to produce a mold corresponding to the injection molding equipment other than the injection molding equipment, which requires high costs. In addition, producing the cooling floor member by injection molding is not effective compared to producing by thermocompression bonding. For example, a step of adhering the thermoplastic resin composition to the metal floor base material by injection molding (for example, a step of injecting the thermoplastic resin composition into the mold in a state in which the metal floor base material is disposed in the mold) and a step of adhering the thermoplastic resin composition and the flat sheet-like metal floor sheet to each other by thermocompression bonding are required, and two steps, i.e., the injection step and the thermocompression bonding step are required.

Meanwhile, in a case where the cooling floor member is produced by thermocompression bonding, it can be produced in one step of placing the partition member between the metal floor base material and the flat sheet-like metal floor sheet and then performing thermocompression bonding.

In this way, the cooling floor member 100A can be produced more efficiently by thermocompression bonding than by injection molding.

Since the metal floor base material 101 and the flat sheet-like metal floor sheet 102 are different from the partition member 105 in coefficient of linear expansion, it is possible to relax the strain generated at the contact interface during expansion and contraction due to temperature changes. Therefore, the stable cooling liquid channel 104 can be maintained. Furthermore, the out-of-plane deformation of the metal floor base material 101 and the flat sheet-like metal floor sheet 102 is small, and the shapes of the metal floor base material 101 and the flat sheet-like metal floor sheet 102 are easily maintained flat.

In addition, since there are no welding points in the partition member 105, and the metal floor base material 101 and the flat sheet-like metal floor sheet 102, it is possible to avoid the leakage of the cooling medium from welding defects such as pinholes that are formed near the welded portions.

### [Second Embodiment]

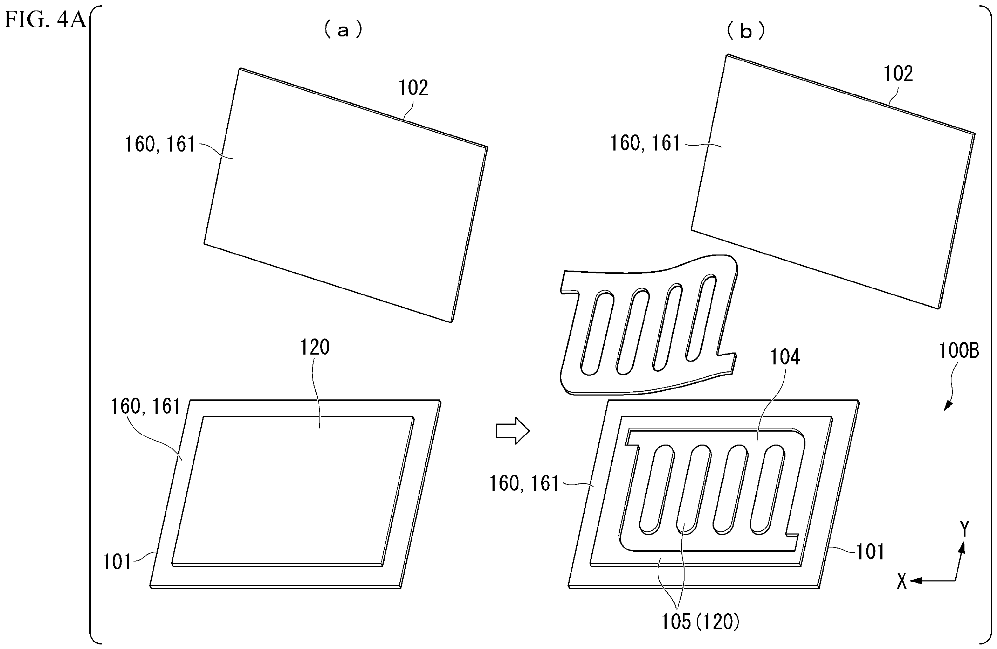

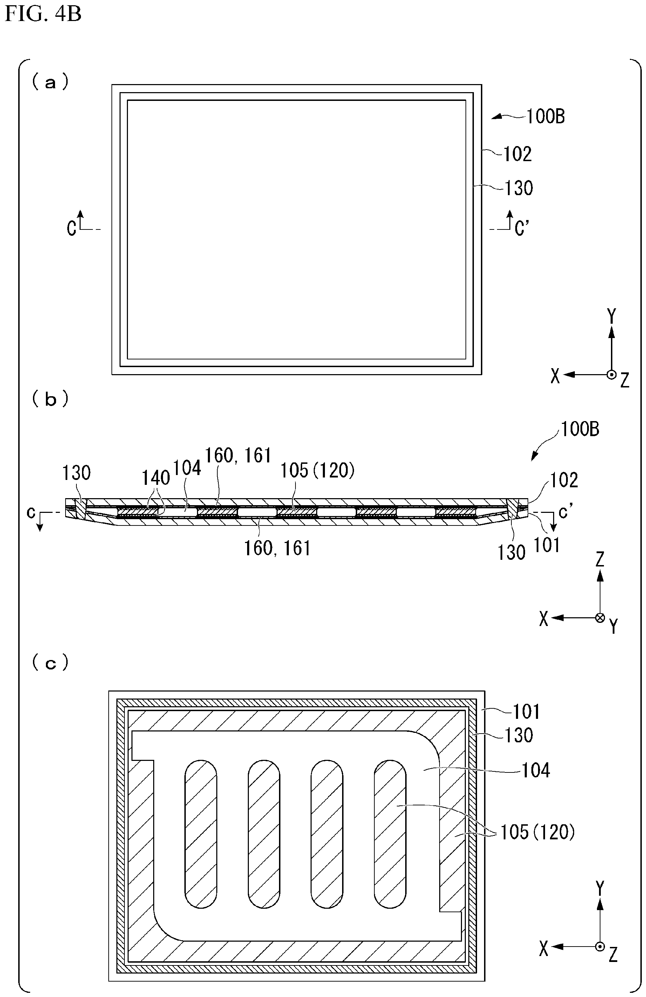

A cooling floor member 100B according to a second embodiment will be described with reference to FIGS. 4A and 4B. In the second embodiment, the same configurations as those in the first embodiment are denoted by the same reference numerals, and description thereof will be omitted. Only differences will be described.

The present embodiment is different from the first embodiment in that the partition member 105 is a coating resin 120 that is a resin coating. The coating resin 120 is a thermoplastic resin composition.

FIG. 4A shows exploded perspective views showing a schematic configuration of the cooling floor member 100B according to the present embodiment. FIG. 4A shows a state in which a metal floor base material 101 and a flat sheet-like metal floor sheet 102 are not joined to each other. FIG. 4B shows a state in which the outer peripheral edge of the metal floor base material 101 and the outer peripheral edge of the flat sheet-like metal floor sheet 102 are joined to each other.

In the present embodiment, a cooling liquid channel 104 is formed by peeling off a part of a resin (coating resin 120) applied on one surface of the metal floor base material 101 and one surface of the flat sheet-like metal floor sheet 102. (a) of FIG. 4A shows a state in which an upper surface of the metal floor base material 101 is coated with the resin, that is a state before peeling off of the coating resin 120. (b) of FIG. 4A shows a state in which the coating resin 120 is partially peeled off.

For example, as shown in (a) of FIG. 4A, one surface of the metal floor base material 101 (the upper surface of the metal floor base material 101) is coated with a resin. Next, a part of the resin coating is peeled off to form a channel, and the flat sheet-like metal floor sheet 102 is overlapped on the resin to directly and continuously join the outer peripheral edge of the metal floor base material 101 and the outer peripheral edge of the flat sheet-like metal floor sheet 102 to each other. As a result, the remaining resin that has not been peeled off becomes the partition member 105, and the path after the peeling off becomes the cooling liquid channel 104. In addition, similarly to the above, the cooling liquid channel 104 is provided with a supply tube (not shown) and a discharge tube (not shown).

For example, the resin is previously applied on the metal floor base material 101. As a method of coating the metal floor base material 101 with the resin, for example, coating by thermocompression bonding is performed. Alternatively, coating by slit coating or dip coating is performed.

The thickness of the coating resin is 1 mm to 7 mm. The thickness of the coating resin is preferably 5 mm or less from the viewpoint of moldability, although depending on the shape of the water channel and the required amount of water. More preferably, the thickness of the coating resin is 3 mm or less.

The coating resin is peeled off by, for example, a cutter, punching, or laser machining.

As shown in FIGS. 4A and 4B, a polypropylene layer 160 or a polycarbonate unit-containing polyurethane layer 161 is applied to the inner surface side of the metal floor base material 101 and the inner surface side of the flat sheet-like metal floor sheet 102.

The film thicknesses of the polypropylene layer 160 and the polycarbonate unit-containing polyurethane layer 161 are 0.2 µm or more. The film thicknesses of the polypropylene layer 160 and the polycarbonate unit-containing polyurethane layer 161 are 0.2 µm or more from the viewpoint that the polypropylene layer 160 and the polycarbonate unit-containing polyurethane layer 161 uniformly cover the surface of the shaped metallic material and the joining force between the coated, shaped metallic material and a molded body of the thermoplastic resin composition 106 is ensured. The film thicknesses of the polypropylene layer 160 and the polycarbonate unit-containing polyurethane layer 161 are preferably 2.0 µm or more. The film thicknesses of the polypropylene layer 160 and the polycarbonate unit-containing polyurethane layer 161 are preferably 10 µm or less. The adhesion to the thermoplastic resin composition 106 is improved by increasing the film thickness, but no significant improvement is observed in performance in a case where the film thickness is more than 10 µm, which is disadvantageous in terms of manufacturing and cost.

The coating resin 120 is thermocompression-bonded between the flat sheet-like metal floor sheet 102 and the metal floor base material 101 coated with the polypropylene layer 160 or the polycarbonate unit-containing polyurethane layer 161. Since the coating resin 120 is adhered to the polypropylene layer 160 or the polycarbonate unit-containing polyurethane layer 161 by thermocompression bonding, joining is possible without using an adhesive or screws and the manufacturing becomes easier.

In the present embodiment as well, a compatible layer 140 is formed between the metal floor base material 101 or the flat sheet-like metal floor sheet 102 or a combination thereof and the partition member 105. Specifically, the compatible layer 140 is formed between the polypropylene layer 160 or the polycarbonate unit-containing polyurethane layer 161 and the coating resin 120. The polypropylene layer 160 or the polycarbonate unit-containing polyurethane layer 161 and the coating resin 120 are adhered to each other through melting of the resins and forming of the compatible layer 140. Since the cooling floor member 100B has the compatible layer 140, no interface is present between the polypropylene layer 160 or the polycarbonate unit-containing polyurethane layer 161 and the coating resin 120. Accordingly, the cooling medium does not intrude into the joining interface portion, and excellent adhesion strength durability is obtained. FIG. 4B shows an aspect in which the polypropylene layer 160 or the polycarbonate unit-containing polyurethane layer 161 is provided on both of the metal floor base material 101 side and the flat sheet-like metal floor sheet 102 side, but the present disclosure is not limited thereto. The polypropylene layer 160 or the polycarbonate unit-containing polyurethane layer 161 may be provided on either one side. In addition, FIG. 4B shows an aspect in which the compatible layer 140 is provided on both of the metal floor base material 101 side and the flat sheet-like metal floor sheet 102 side, but the present disclosure is not limited thereto. The compatible layer 140 may be provided on either one side.

The coating resin 120 is easily peeled off in accordance with a desired shape of the cooling liquid channel 104 and has a high degree of freedom in layout design. Furthermore, the shape of the channel is easily visually confirmed.

In the present embodiment, as shown in FIGS. 4A and 4B, the coating resin 120 is disposed along the Y direction, but the direction in which the coating resin 120 is disposed is not limited thereto. For example, the coating resin 120 may be disposed along the X direction. Further, as in the first embodiment, the coating resin 120 may be disposed so that the cooling liquid channel 104 meanders.

In a case where the cooling medium flows along the coating resin 120 disposed as above, a battery cell 3 can be more efficiently cooled.

### [Third Embodiment]

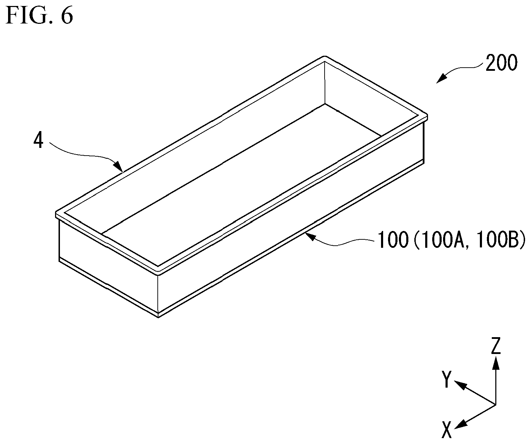

FIG. 6 is an exploded perspective view showing an example of a schematic configuration of a battery case-integrated cooling channel 200. The cooling floor member 100A according to the first embodiment and the cooling floor member 100B according to the second embodiment described above are formed integrally with a lower cover (battery case) 4. The battery case-integrated cooling channel 200 has the above-described cooling floor member 100A, 100B and the lower cover (battery case) 4. The battery case-integrated cooling channel 200 is in a state in which the battery case 4 and the cooling floor member 100A, 100B are joined to or combined with each other. In a case where the battery case 4 and the cooling floor member 100A, 100B are joined to each other, they are joined by welding, mechanical joining, a joining member such as screws, or an adhesive.

The battery case-integrated cooling channel 200 may have a shape in which the cooling floor member 100A is the lower cover 4 as shown in FIG. 5C.

Since the battery case-integrated cooling channel 200 has the above-described cooling floor member 100A, 100B, the battery case-integrated cooling channel 200 exhibits the same effects as those of the cooling floor member 100A according to the first embodiment and the cooling floor member 100B according to the second embodiment described above.

The cooling floor members 100A and 100B described in the above-described embodiments are applied to, for example, electric vehicles and hybrid vehicles.

Hitherto, the embodiments of the present disclosure have been described, but the above-described embodiments are presented as examples, and the scope of the present disclosure is not limited only to the above-described embodiments. The above-described embodiments can be implemented in various forms, and various omissions, replacements, and changes can be made without departing from the gist of the disclosure. The above embodiments and modifications thereof are included in the scope and gist of the disclosure as well as in the scope of the disclosure described in the claims and its equivalents.

For example, the cooling floor member according to each embodiment described above is disposed between the lower cover 4 and the battery cell 3 as shown in FIG. 1, but in a case where a plurality of the battery cells 3 are stacked in the Z direction, the cooling floor member may be disposed between the battery cells 3.

### (Examples)

Adhesiveness was investigated between a steel sheet having a polypropylene layer or a polycarbonate unit-containing polyurethane layer and a thermoplastic resin composition.

### (1) Details of Steel Sheets Used in Examples

As cold-rolled steel sheets (SPCC) having a sheet thickness of 0.8 mm, a hot-dip Zn-6 mass% Al-3 mass% Mg alloy-plated steel sheet and an aluminum-plated steel sheet having a plating adhesion amount of 45 g/m2 per surface were prepared. As the hot-dip Zn-6 mass% Al-3 mass% Mg alloy-plated steel sheet, ZAM (registered trademark), that is a hot-dip Zn-6 mass% Al-3 mass% Mg alloy-plated steel sheet, manufactured by NIPPON STEEL CORPORATION was used, and as the aluminum-plated steel sheet, untreated ALSHEET (registered trademark) manufactured by NIPPON STEEL CORPORATION (not subjected to a post-treatment or chemical conversion treatment) was used. The sheet thickness was 0.5 mm.

### (2) Adjustment of Coating Materials for Forming Film Layer Used in Examples

A polypropylene resin (film resin A) was used as the polypropylene layer. In Examples, in consideration of suppression of damage to the film layer when the steel sheet was worked after coated with the polypropylene layer, a coating material containing 20% nonvolatile components was prepared by adding, to a mixed resin, 5 mass% of polyethylene wax and 5 mass% of an epoxy-based crosslinking agent based on the total mass of resin solids, and then adding water. In addition, as the polycarbonate unit-containing polyurethane layer, a coating material containing 20% nonvolatile components was prepared by adding a polycarbonate-containing resin (film resins B, C, and D) to water.

### Film Resin A. Polypropylene Resin

As the polypropylene resin, HARDLEN NZ-1015 (TOYOBO CO., LTD.) was used.

### Film Resin B. Polycarbonate-Containing Resin

As the polycarbonate-containing resin, SF-470 (DKS Co. Ltd.), that is a polyurethane resin containing 70 mass% of a polycarbonate unit, was used.

### Film Resin C. Polycarbonate-Containing Resin

As the polycarbonate-containing resin, a polyurethane resin containing 60 mass% of a polycarbonate unit was adjusted by adding HUX-232 (ADEKA CORPORATION), that is a polyurethane resin, to the film resin B, and used.

### Film resin D. Polycarbonate-Containing Resin

As the polycarbonate-containing resin, a polyurethane resin containing 50 mass% of a polycarbonate unit was adjusted by adding HUX-232 (ADEKA CORPORATION), that is a polyurethane resin, to the film resin B, and used.

### (3) Formation of Film Layer on Steel Sheet

The steel sheet was immersed in an alkaline degreasing aqueous solution (SD-270; Nippon Paint Co., Ltd., pH = 12) having a liquid temperature of 60°C for 1 minute to degrease the surface. Next, to the degreased surface of the coating substrate, the coating material prepared as shown in Table 1 was applied by a roll coater and dried by a hot air dryer so that the sheet temperature reached 150°C, and thus a film layer having a film thickness (µm) shown in Tables 1A to 1E was formed.

### (4) Thermoplastic Resin Compositions Used in Examples

As the thermoplastic resin composition, a polyethylene (PE)-based resin composition, a polypropylene (PP)-based resin composition, a polycarbonate (PC)-based resin composition, and a polyamide (PA)-based resin composition were used. As the polyethylene-based resin composition, NIPOLON HARD 1000 (melting temperature: 134°C; Tosoh Corporation) was used. As the polypropylene-based resin composition, PRIME POLYPRO R-350G (melting temperature 150°C; Prime Polymer Co., Ltd.) was used. As the polycarbonate-based resin composition, IUPILON GSH2030FT (melting temperature 238°C; Mitsubishi Engineering-Plastics Corporation) was used. As the polyamide-based resin composition, AMYLAN CM3511G50 (melting temperature 216°C; TORAY INDUSTRIES, INC) was used.

### (5) Production of Composite of Steel Sheet and Thermoplastic Resin Composition for Adhesiveness Evaluation

Tables 1A to 1E show pressure bonding conditions between the steel sheet and the thermoplastic resin composition. Details thereof are as follows. The steel sheet with a film layer having a film thickness of 0.2 nm or more formed thereon was cut into a length of 100 mm × a width of 100 mm, and then heated by electromagnetic induction heating. The heated steel sheet was thermocompression-bonded to the thermoplastic resin composition cut into a length of 30 mm × a width of 30 mm × a thickness of 4 mm to produce a composite. The heating temperature of the steel sheet was set to 120°C to 290°C, the pressure for pressure bonding was set to 0.05 MPa to 1.5 MPa, and the time for pressure bonding was set to 5 seconds to 20 seconds. In a case where the thermoplastic resin composition was a polyethylene (PE)-based resin composition or a polypropylene (PP)-based resin composition, the standard conditions were set to heating the steel sheet to a temperature of 160°C and performing thermocompression bonding for 10 seconds. In a case where the thermoplastic resin composition was a polycarbonate (PC)-based resin composition or a polyamide (PA)-based resin composition, the standard conditions were set to heating the steel sheet to a temperature of 250°C and performing thermocompression bonding for 2 seconds. For the electromagnetic induction heating, a high frequency induction heating device (Pearl Industries, Ltd.) was used.

In a case of the film resin A, the heating temperature range is 120°C or higher at which the film resin A melts, and in cases of the film resins B, C, and D, the heating temperature range is 160°C or higher at which the film resins B, C, and D melt. A preferable heating temperature range is equal to or higher than a temperature at which the thermoplastic resin melts, whereby the formation of a compatible layer is promoted and burrs are formed. A more preferable heating temperature range is equal to or lower than [temperature at which thermoplastic resin melts (°C) + 100°C], which suppresses thermal deterioration of the film resin and the thermoplastic resin.

The pressure bonding time is preferably 5 seconds, and no significant improvement is observed in performance even in a case where the pressure bonding time is 20 seconds or longer.

### (6) Compatible Layer

Tables 1A to 1E show thickness evaluation of the formed compatible layers. In the thickness evaluation in the tables, "1" indicates that the thickness t of the compatible layer is less than 25 nm, "2" indicates that the thickness t of the compatible layer is 25 nm or more and less than 100 nm, "3" indicates that the thickness t of the compatible layer is 100 nm or more and less than 250 nm, and "4" indicates that the thickness t of the compatible layer is 250 nm or more. In the thickness evaluation of the compatible layers, "2" is preferable, "3" is more preferable, and "4" is even more preferable from the viewpoint of adhesion.

Regarding the thickness of the compatible layer, a cross section including the joining surface between the film layer and the thermoplastic resin (partition member) is subjected to elemental analysis with an electron microanalyzer (EPMA), and from the thickness of the phase changing from the atomic composition specific to the resin layer to the atomic composition specific to thermoplastic resin composition, the thickness of the compatible layer is calculated. Specifically, a cross section including the joining surface was subjected to elemental analysis with an electron microanalyzer (EPMA) to confirm the thickness of the compatible layer. As a pretreatment, the cross section including the joining surface was worked by Ar milling, and then subjected to converging ion beam (FIB) machining to produce a thin piece having a thickness of about 500 nm, and the obtained cross section was vapor-deposited with osmium. The EPMA analysis was performed using EPMA-8050G manufactured by Shimadzu Corporation with an acceleration voltage of 15 kV and an irradiation current of 100 nA. The atomic composition was confirmed by a line profile, and the thickness of the compatible layer was calculated.

### (7) Burrs

Tables 1A to 1E show the presence or absence of the generation of burrs formed at an edge portion of the compatible layer 140. The generation of burrs was visually confirmed.

### (8) Adhesiveness Evaluation

In the composite for adhesion evaluation, the strength (peeling strength) when the coated, shaped metallic material and the molded body of the thermoplastic resin composition were pulled in the same plane direction at a speed of 100 mm/min and fractured was measured. A case where the peeling strength was less than 1.0 kN was evaluated as "C", a case where the peeling strength was 1.0 kN or more and less than 1.5 kN was evaluated as "B", and a case where the peeling strength was 1.5 kN or more was evaluated as "A". "B" or "A" was evaluated as acceptable in adhesiveness.

The peeling strength was measured after immersion of the composite for 1,000 hours in cooling water at a temperature of 25°C to 30°C. As the cooling water, an aqueous solution obtained by diluting a long-life coolant KQ202-20018 (NISSAN MOTOR CO., LTD.) with water to 30 mass% was used. A case where the peeling strength after immersion in the cooling liquid was less than 40% of the strength retention from the peeling strength before immersion in the cooling liquid was evaluated as "C", a case where the peeling strength after immersion in the cooling liquid was 40% to 80% of the strength retention from the peeling strength before immersion in the cooling liquid was evaluated as "B", and a case where the peeling strength after immersion in the cooling liquid was 80% or more of the strength retention from the peeling strength before immersion in the cooling liquid was evaluated as "A". "A" or "B" was evaluated as acceptable in adhesiveness.

The results are shown in Tables 1A to 1E.

**[Table 1A]**

| No. | Film Resin | Steel Sheet Kind | Film Thickness (µm) | Thermoplastic Resin Composition | Thermocompression Bonding Conditions | | | Compatible Layer | Burrs | Peeling Strength | Peeling Strength After Immersion in Cooling Liquid | Cooling Water Leakage Resistance | |
|---|---|---|---|---|---|---|---|---|---|---|---|---|---|
| | | | | | Temperature (°C) | Pressure (MPa) | Time (sec) | Thickness Evaluation | Presence or Absence | | | | |
| | | | | | | | | | | | | 24 h | 1,000 h |
| Example 1 | A | Zn-Al-Mg Alloy-Plated Steel Sheet | 0.2 | PE-Based Resin | 160 | 0.5 | 10 | 3 | Presence | B | B | B | B |
| Example 2 | A | Zn-Al-Mg Alloy-Plated Steel Sheet | 1 | PE-Based Resin | 160 | 0.5 | 10 | 3 | Presence | A | B | B | B |
| Example 3 | A | Zn-Al-Mg Alloy-Plated Steel Sheet | 2 | PE-Based Resin | 160 | 0.5 | 10 | 3 | Presence | A | B | B | B |
| Example 4 | A | Zn-Al-Mg Alloy-Plated Steel Sheet | 4 | PE-Based Resin | 160 | 0.5 | 10 | 3 | Presence | A | B | B | B |
| Example 5 | A | Zn-Al-Mg Alloy-Plated Steel Sheet | 10 | PE-Based Resin | 160 | 0.5 | 10 | 3 | Presence | A | B | B | B |
| Example 6 | A | Zn-Al-Mg Alloy-Plated Steel Sheet | 15 | PE-Based Resin | 160 | 0.5 | 10 | 3 | Presence | A | B | B | B |
| Example 7 | A | Aluminum-Plated Steel Sheet | 0.2 | PE-Based Resin | 160 | 0.5 | 10 | 3 | Presence | B | B | B | B |
| Example 8 | A | Aluminum-Plated Steel Sheet | 1 | PE-Based Resin | 160 | 0.5 | 10 | 3 | Presence | A | B | B | B |
| Example 9 | A | Aluminum-Plated Steel Sheet | 2 | PE-Based Resin | 160 | 0.5 | 10 | 3 | Presence | A | B | B | B |
| Example 10 | A | Aluminum-Plated Steel Sheet | 4 | PE-Based Resin | 160 | 0.5 | 10 | 3 | Presence | A | B | B | B |
| Example 11 | A | Aluminum-Plated Steel Sheet | 10 | PE-Based Resin | 160 | 0.5 | 10 | 3 | Presence | A | B | B | B |
| Example 12 | A | Aluminum-Plated Steel Sheet | 15 | PE-Based Resin | 160 | 0.5 | 10 | 3 | Presence | A | B | B | B |
| Example 13 | A | Zn-Al-Mg Alloy-Plated Steel Sheet | 1 | PE-Based Resin | 200 | 0.5 | 10 | 4 | Presence | A | A | B | B |
| Example 14 | A | Zn-Al-Mg Alloy-Plated Steel Sheet | 2 | PE-Based Resin | 200 | 0.5 | 10 | 4 | Presence | A | A | B | B |
| Example 15 | A | Zn-Al-Mg Alloy-Plated Steel Sheet | 4 | PE-Based Resin | 200 | 0.5 | 10 | 4 | Presence | A | A | B | B |
| Example 16 | A | Zn-Al-Mg Alloy-Plated Steel Sheet | 1 | PE-Based Resin | 120 | 0.5 | 10 | 2 | Absence | B | B | B | B |
| Example 17 | A | Zn-Al-Mg Alloy-Plated Steel Sheet | 2 | PE-Based Resin | 120 | 0.5 | 10 | 2 | Absence | B | B | B | B |
| Example 18 | A | Zn-Al-Mg Alloy-Plated Steel Sheet | 4 | PE-Based Resin | 120 | 0.5 | 10 | 2 | Absence | B | B | B | B |
| Example 19 | A | Zn-Al-Mg Alloy-Plated Steel Sheet | 1 | PE-Based Resin | 160 | 1.5 | 10 | 3 | Presence | A | B | B | B |
| Example 20 | A | Zn-Al-Mg Alloy-Plated Steel Sheet | 2 | PE-Based Resin | 160 | 1.5 | 10 | 3 | Presence | A | B | B | B |
| Example 21 | A | Zn-Al-Mg Alloy-Plated Steel Sheet | 4 | PE-Based Resin | 160 | 1.5 | 10 | 3 | Presence | A | B | B | B |
| Example 22 | A | Zn-Al-Mg Alloy-Plated Steel Sheet | 1 | PE-Based Resin | 160 | 0.05 | 10 | 3 | Absence | A | B | B | B |
| Example 23 | A | Zn-Al-Mg Alloy-Plated Steel Sheet | 2 | PE-Based Resin | 160 | 0.05 | 10 | 3 | Absence | A | B | B | B |
| Example 24 | A | Zn-Al-Mg Alloy-Plated Steel Sheet | 4 | PE-Based Resin | 160 | 0.05 | 10 | 3 | Absence | A | B | B | B |
| Example 25 | A | Zn-Al-Mg Alloy-Plated Steel Sheet | 1 | PE-Based Resin | 120 | 1.5 | 10 | 2 | Absence | B | B | B | B |
| Example 26 | A | Zn-Al-Mg Alloy-Plated Steel Sheet | 2 | PE-Based Resin | 120 | 1.5 | 10 | 2 | Absence | B | B | B | B |
| Example 27 | A | Zn-Al-Mg Alloy-Plated Steel Sheet | 4 | PE-Based Resin | 120 | 1.5 | 10 | 2 | Absence | B | B | B | B |
| Example 28 | A | Zn-Al-Mg Alloy-Plated Steel Sheet | 1 | PE-Based Resin | 120 | 0.05 | 10 | 2 | Absence | B | B | B | B |
| Example 29 | A | Zn-Al-Mg Alloy-Plated Steel Sheet | 2 | PE-Based Resin | 120 | 0.05 | 10 | 2 | Absence | B | B | B | B |
| Example 30 | A | Zn-Al-Mg Alloy-Plated Steel Sheet | 4 | PE-Based Resin | 120 | 0.05 | 10 | 2 | Absence | B | B | B | B |
| Example 31 | A | Zn-Al-Mg Alloy-Plated Steel Sheet | 1 | PE-Based Resin | 160 | 0.5 | 20 | 4 | Presence | A | A | B | B |
| Example 32 | A | Zn-Al-Mg Alloy-Plated Steel Sheet | 2 | PE-Based Resin | 160 | 0.5 | 20 | 4 | Presence | A | A | B | B |
| Example 33 | A | Zn-Al-Mg Alloy-Plated Steel Sheet | 4 | PE-Based Resin | 160 | 0.5 | 20 | 4 | Presence | A | A | B | B |
| Example 34 | A | Zn-Al-Mg Alloy-Plated Steel Sheet | 1 | PE-Based Resin | 160 | 0.5 | 5 | 2 | Presence | A | B | B | B |
| Example 35 | A | Zn-Al-Mg Alloy-Plated Steel Sheet | 2 | PE-Based Resin | 160 | 0.5 | 5 | 2 | Presence | A | B | B | B |
| Example 36 | A | Zn-Al-Mg Alloy-Plated Steel Sheet | 4 | PE-Based Resin | 160 | 0.5 | 5 | 2 | Presence | A | B | B | B |
| Example 37 | A | Zn-Al-Mg Alloy-Plated Steel Sheet | 1 | PP-Based Resin | 160 | 0.5 | 10 | 3 | Presence | A | B | B | B |
| Example 38 | A | Zn-Al-Mg Alloy-Plated Steel Sheet | 2 | PP-Based Resin | 160 | 0.5 | 10 | 3 | Presence | A | B | B | B |
| Example 39 | A | Zn-Al-Mg Alloy-Plated Steel Sheet | 4 | PP-Based Resin | 160 | 0.5 | 10 | 3 | Presence | A | B | B | B |
| Example 40 | A | Zn-Al-Mg Alloy-Plated Steel Sheet | 4 | PE-Based Resin | 140 | 0.5 | 10 | 3 | Presence | A | B | B | B |
| Example 41 | A | Zn-Al-Mg Alloy-Plated Steel Sheet | 4 | PE-Based Resin | 200 | 0.5 | 20 | 4 | Presence | A | A | B | B |
| Example 42 | A | Zn-Al-Mg Alloy-Plated Steel Sheet | 4 | PE-Based Resin | 200 | 1.5 | 10 | 4 | Presence | A | A | B | B |
| Example 43 | A | Zn-Al-Mg Alloy-Plated Steel Sheet | 4 | PE-Based Resin | 200 | 1.5 | 20 | 4 | Presence | A | A | B | B |
| Example 44 | A | Zn-Al-Mg Alloy-Plated Steel Sheet | 4 | PE-Based Resin | 200 | 0.05 | 10 | 4 | Absence | A | B | B | B |
| Example 45 | A | Zn-Al-Mg Alloy-Plated Steel Sheet | 4 | PE-Based Resin | 200 | 0.5 | 5 | 3 | Presence | A | B | B | B |
| Example 46 | A | Zn-Al-Mg Alloy-Plated Steel Sheet | 4 | PE-Based Resin | 200 | 0.05 | 5 | 3 | Absence | A | B | B | B |

**[Table 1B]**

| No. | Film Resin | Steel Sheet Kind | Film Thickness (µm) | Thermoplastic Resin Composition | Thermocompression Bonding Conditions | | | Compatible Layer | Burrs | Peeling Strength | Peeling Strength After Immersion in Cooling Liquid | Cooling Water Leakage Resistance | |
|---|---|---|---|---|---|---|---|---|---|---|---|---|---|
| | | | | | Temperature (°C) | Pressure (MPa) | Time (sec) | Thickness Evaluation | Presence or Absence | | | | |
| | | | | | | | | | | | | 24 h | 1,000 h |
| Example 47 | B | Zn-Al-Mg Alloy-Plated Steel Sheet | 0.2 | PC-Based Resin | 250 | 0.5 | 10 | 3 | Presence | B | B | B | B |
| Example 48 | B | Zn-Al-Mg Alloy-Plated Steel Sheet | 1 | PC-Based Resin | 250 | 0.5 | 10 | 3 | Presence | A | B | B | B |
| Example 49 | B | Zn-Al-Mg Alloy-Plated Steel Sheet | 2 | PC-Based Resin | 250 | 0.5 | 10 | 3 | Presence | A | B | B | B |
| Example 50 | B | Zn-Al-Mg Alloy-Plated Steel Sheet | 4 | PC-Based Resin | 250 | 0.5 | 10 | 3 | Presence | A | B | B | B |
| Example 51 | B | Zn-Al-Mg Alloy-Plated Steel Sheet | 10 | PC-Based Resin | 250 | 0.5 | 10 | 3 | Presence | A | B | B | B |
| Example 52 | B | Zn-Al-Mg Alloy-Plated Steel Sheet | 15 | PC-Based Resin | 250 | 0.5 | 10 | 3 | Presence | A | B | B | B |
| Example 53 | B | Aluminum-Plated Steel Sheet | 0.2 | PC-Based Resin | 250 | 0.5 | 10 | 3 | Presence | B | B | B | B |
| Example 54 | B | Aluminum-Plated Steel Sheet | 1 | PC-Based Resin | 250 | 0.5 | 10 | 3 | Presence | A | B | B | B |
| Example 55 | B | Aluminum-Plated Steel Sheet | 2 | PC-Based Resin | 250 | 0.5 | 10 | 3 | Presence | A | B | B | B |
| Example 56 | B | Aluminum-Plated Steel Sheet | 4 | PC-Based Resin | 250 | 0.5 | 10 | 3 | Presence | A | B | B | B |
| Example 57 | B | Aluminum-Plated Steel Sheet | 10 | PC-Based Resin | 250 | 0.5 | 10 | 3 | Presence | A | B | B | B |
| Example 58 | B | Aluminum-Plated Steel Sheet | 15 | PC-Based Resin | 250 | 0.5 | 10 | 3 | Presence | A | B | B | B |
| Example 59 | B | Zn-Al-Mg Alloy-Plated Steel Sheet | 1 | PC-Based Resin | 290 | 0.5 | 10 | 4 | Presence | A | A | B | B |
| Example 60 | B | Zn-Al-Mg Alloy-Plated Steel Sheet | 2 | PC-Based Resin | 290 | 0.5 | 10 | 4 | Presence | A | A | B | B |
| Example 61 | B | Zn-Al-Mg Alloy-Plated Steel Sheet | 4 | PC-Based Resin | 290 | 0.5 | 10 | 4 | Presence | A | A | B | B |
| Example 62 | B | Zn-Al-Mg Alloy-Plated Steel Sheet | 1 | PC-Based Resin | 160 | 0.5 | 10 | 2 | Absence | B | B | B | B |
| Example 63 | B | Zn-Al-Mg Alloy-Plated Steel Sheet | 2 | PC-Based Resin | 160 | 0.5 | 10 | 2 | Absence | B | B | B | B |
| Example 64 | B | Zn-Al-Mg Alloy-Plated Steel Sheet | 4 | PC-Based Resin | 160 | 0.5 | 10 | 2 | Absence | B | B | B | B |
| Example 65 | B | Zn-Al-Mg Alloy-Plated Steel Sheet | 1 | PC-Based Resin | 250 | 1.5 | 10 | 3 | Presence | A | B | B | B |
| Example 66 | B | Zn-Al-Mg Alloy-Plated Steel Sheet | 2 | PC-Based Resin | 250 | 1.5 | 10 | 3 | Presence | A | B | B | B |
| Example 67 | B | Zn-Al-Mg Alloy-Plated Steel Sheet | 4 | PC-Based Resin | 250 | 1.5 | 10 | 3 | Presence | A | B | B | B |
| Example 68 | B | Zn-Al-Mg Alloy-Plated Steel Sheet | 1 | PC-Based Resin | 250 | 0.05 | 10 | 3 | Absence | A | B | B | B |
| Example 69 | B | Zn-Al-Mg Alloy-Plated Steel Sheet | 2 | PC-Based Resin | 250 | 0.05 | 10 | 3 | Absence | A | B | B | B |
| Example 70 | B | Zn-Al-Mg Alloy-Plated Steel Sheet | 4 | PC-Based Resin | 250 | 0.05 | 10 | 3 | Absence | A | B | B | B |
| Example 71 | B | Zn-Al-Mg Alloy-Plated Steel Sheet | 1 | PC-Based Resin | 160 | 1.5 | 10 | 2 | Absence | B | B | B | B |
| Example 72 | B | Zn-Al-Mg Alloy-Plated Steel Sheet | 2 | PC-Based Resin | 160 | 1.5 | 10 | 2 | Absence | B | B | B | B |
| Example 73 | B | Zn-Al-Mg Alloy-Plated Steel Sheet | 4 | PC-Based Resin | 160 | 1.5 | 10 | 2 | Absence | B | B | B | B |
| Example 74 | B | Zn-Al-Mg Alloy-Plated Steel Sheet | 1 | PC-Based Resin | 160 | 0.05 | 10 | 2 | Absence | B | B | B | B |
| Example 75 | B | Zn-Al-Mg Alloy-Plated Steel Sheet | 2 | PC-Based Resin | 160 | 0.05 | 10 | 2 | Absence | B | B | B | B |
| Example 76 | B | Zn-Al-Mg Alloy-Plated Steel Sheet | 4 | PC-Based Resin | 160 | 0.05 | 10 | 2 | Absence | B | B | B | B |
| Example 77 | B | Zn-Al-Mg Alloy-Plated Steel Sheet | 1 | PC-Based Resin | 250 | 0.5 | 20 | 4 | Presence | A | A | B | B |
| Example 78 | B | Zn-Al-Mg Alloy-Plated Steel Sheet | 2 | PC-Based Resin | 250 | 0.5 | 20 | 4 | Presence | A | A | B | B |
| Example 79 | B | Zn-Al-Mg Alloy-Plated Steel Sheet | 4 | PC-Based Resin | 250 | 0.5 | 20 | 4 | Presence | A | A | B | B |
| Example 80 | B | Zn-Al-Mg Alloy-Plated Steel Sheet | 1 | PC-Based Resin | 250 | 0.5 | 5 | 2 | Presence | A | B | B | B |
| Example 81 | B | Zn-Al-Mg Alloy-Plated Steel Sheet | 2 | PC-Based Resin | 250 | 0.5 | 5 | 2 | Presence | A | B | B | B |
| Example 82 | B | Zn-Al-Mg Alloy-Plated Steel Sheet | 4 | PC-Based Resin | 250 | 0.5 | 5 | 2 | Presence | A | B | B | B |
| Example 83 | B | Zn-Al-Mg Alloy-Plated Steel Sheet | 1 | PA-Based Resin | 250 | 0.5 | 10 | 3 | Presence | A | B | B | B |
| Example 84 | B | Zn-Al-Mg Alloy-Plated Steel Sheet | 2 | PA-Based Resin | 250 | 0.5 | 10 | 3 | Presence | A | B | B | B |
| Example 85 | B | Zn-Al-Mg Alloy-Plated Steel Sheet | 4 | PA-Based Resin | 250 | 0.5 | 10 | 3 | Presence | A | B | B | B |
| Example 86 | B | Zn-Al-Mg Alloy-Plated Steel Sheet | 4 | PC-Based Resin | 240 | 0.5 | 10 | 3 | Presence | A | B | B | B |
| Example 87 | B | Zn-Al-Mg Alloy-Plated Steel Sheet | 4 | PC-Based Resin | 290 | 0.5 | 20 | 4 | Presence | A | A | B | B |
| Example 88 | B | Zn-Al-Mg Alloy-Plated Steel Sheet | 4 | PC-Based Resin | 290 | 1.5 | 10 | 4 | Presence | A | A | B | B |
| Example 89 | B | Zn-Al-Mg Alloy-Plated Steel Sheet | 4 | PC-Based Resin | 290 | 1.5 | 20 | 4 | Presence | A | A | B | B |
| Example 90 | B | Zn-Al-Mg Alloy-Plated Steel Sheet | 4 | PC-Based Resin | 290 | 0.05 | 10 | 4 | Absence | A | B | B | B |
| Example 91 | B | Zn-Al-Mg Alloy-Plated Steel Sheet | 4 | PC-Based Resin | 290 | 0.5 | 5 | 3 | Presence | A | B | B | B |
| Example 92 | B | Zn-Al-Mg Alloy-Plated Steel Sheet | 4 | PC-Based Resin | 290 | 0.05 | 5 | 3 | Absence | A | B | B | B |

**[Table 1C]**

| No. | Film Resin | Steel Sheet Kind | Film Thickness (µm) | Thermoplastic Resin Composition | Thermocompression Bonding Conditions | | | Compatible Layer | Burrs | Peeling Strength | Peeling Strength After Immersion in Cooling Liquid | Cooling Water Leakage Resistance | |
|---|---|---|---|---|---|---|---|---|---|---|---|---|---|
| | | | | | Temperature (°C) | Pressure (MPa) | Time (sec) | Thickness Evaluation | Presence or Absence | | | | |
| | | | | | | | | | | | | 24 h | 1,000 h |
| Example 93 | C | Zn-Al-Mg Alloy-Plated Steel Sheet | 0.2 | PC-Based Resin | 250 | 0.5 | 10 | 3 | Presence | B | B | B | B |
| Example 94 | C | Zn-Al-Mg Alloy-Plated Steel Sheet | 1 | PC-Based Resin | 250 | 0.5 | 10 | 3 | Presence | A | B | B | B |
| Example 95 | C | Zn-Al-Mg Alloy-Plated Steel Sheet | 2 | PC-Based Resin | 250 | 0.5 | 10 | 3 | Presence | A | B | B | B |
| Example 96 | C | Zn-Al-Mg Alloy-Plated Steel Sheet | 4 | PC-Based Resin | 250 | 0.5 | 10 | 3 | Presence | A | B | B | B |
| Example 97 | C | Zn-Al-Mg Alloy-Plated Steel Sheet | 10 | PC-Based Resin | 250 | 0.5 | 10 | 3 | Presence | A | B | B | B |
| Example 98 | C | Zn-Al-Mg Alloy-Plated Steel Sheet | 15 | PC-Based Resin | 250 | 0.5 | 10 | 3 | Presence | A | B | B | B |
| Example 99 | C | Aluminum-Plated Steel Sheet | 0.2 | PC-Based Resin | 250 | 0.5 | 10 | 3 | Presence | B | B | B | B |
| Example 100 | C | Aluminum-Plated Steel Sheet | 1 | PC-Based Resin | 250 | 0.5 | 10 | 3 | Presence | A | B | B | B |
| Example 101 | C | Aluminum-Plated Steel Sheet | 2 | PC-Based Resin | 250 | 0.5 | 10 | 3 | Presence | A | B | B | B |
| Example 102 | C | Aluminum-Plated Steel Sheet | 4 | PC-Based Resin | 250 | 0.5 | 10 | 3 | Presence | A | B | B | B |
| Example 103 | C | Aluminum-Plated Steel Sheet | 10 | PC-Based Resin | 250 | 0.5 | 10 | 3 | Presence | A | B | B | B |
| Example 104 | C | Aluminum-Plated Steel Sheet | 15 | PC-Based Resin | 250 | 0.5 | 10 | 3 | Presence | A | B | B | B |
| Example 105 | C | Zn-Al-Mg Alloy-Plated Steel Sheet | 1 | PC-Based Resin | 290 | 0.5 | 10 | 4 | Presence | A | A | B | B |
| Example 106 | C | Zn-Al-Mg Alloy-Plated Steel Sheet | 2 | PC-Based Resin | 290 | 0.5 | 10 | 4 | Presence | A | A | B | B |
| Example 107 | C | Zn-Al-Mg Alloy-Plated Steel Sheet | 4 | PC-Based Resin | 290 | 0.5 | 10 | 4 | Presence | A | A | B | B |
| Example 108 | C | Zn-Al-Mg Alloy-Plated Steel Sheet | 1 | PC-Based Resin | 160 | 0.5 | 10 | 2 | Absence | B | B | B | B |
| Example 109 | C | Zn-Al-Mg Alloy-Plated Steel Sheet | 2 | PC-Based Resin | 160 | 0.5 | 10 | 2 | Absence | B | B | B | B |
| Example 110 | C | Zn-Al-Mg Alloy-Plated Steel Sheet | 4 | PC-Based Resin | 160 | 0.5 | 10 | 2 | Absence | B | B | B | B |
| Example 111 | C | Zn-Al-Mg Alloy-Plated Steel Sheet | 1 | PC-Based Resin | 250 | 1.5 | 10 | 3 | Presence | A | B | B | B |
| Example 112 | C | Zn-Al-Mg Alloy-Plated Steel Sheet | 2 | PC-Based Resin | 250 | 1.5 | 10 | 3 | Presence | A | B | B | B |
| Example 113 | C | Zn-Al-Mg Alloy-Plated Steel Sheet | 4 | PC-Based Resin | 250 | 1.5 | 10 | 3 | Presence | A | B | B | B |
| Example 114 | C | Zn-Al-Mg Alloy-Plated Steel Sheet | 1 | PC-Based Resin | 250 | 0.05 | 10 | 3 | Absence | A | B | B | B |
| Example 115 | C | Zn-Al-Mg Alloy-Plated Steel Sheet | 2 | PC-Based Resin | 250 | 0.05 | 10 | 3 | Absence | A | B | B | B |
| Example 116 | C | Zn-Al-Mg Alloy-Plated Steel Sheet | 4 | PC-Based Resin | 250 | 0.05 | 10 | 3 | Absence | A | B | B | B |
| Example 117 | C | Zn-Al-Mg Alloy-Plated Steel Sheet | 1 | PC-Based Resin | 160 | 1.5 | 10 | 2 | Absence | B | B | B | B |
| Example 118 | C | Zn-Al-Mg Alloy-Plated Steel Sheet | 2 | PC-Based Resin | 160 | 1.5 | 10 | 2 | Absence | B | B | B | B |
| Example 119 | C | Zn-Al-Mg Alloy-Plated Steel Sheet | 4 | PC-Based Resin | 160 | 1.5 | 10 | 2 | Absence | B | B | B | B |
| Example 120 | C | Zn-Al-Mg Alloy-Plated Steel Sheet | 1 | PC-Based Resin | 160 | 0.05 | 10 | 2 | Absence | B | B | B | B |
| Example 121 | C | Zn-Al-Mg Alloy-Plated Steel Sheet | 2 | PC-Based Resin | 160 | 0.05 | 10 | 2 | Absence | B | B | B | B |
| Example 122 | C | Zn-Al-Mg Alloy-Plated Steel Sheet | 4 | PC-Based Resin | 160 | 0.05 | 10 | 2 | Absence | B | B | B | B |
| Example 123 | C | Zn-Al-Mg Alloy-Plated Steel Sheet | 1 | PC-Based Resin | 250 | 0.5 | 20 | 4 | Presence | A | A | B | B |
| Example 124 | C | Zn-Al-Mg Alloy-Plated Steel Sheet | 2 | PC-Based Resin | 250 | 0.5 | 20 | 4 | Presence | A | A | B | B |
| Example 125 | C | Zn-Al-Mg Alloy-Plated Steel Sheet | 4 | PC-Based Resin | 250 | 0.5 | 20 | 4 | Presence | A | A | B | B |
| Example 126 | C | Zn-Al-Mg Alloy-Plated Steel Sheet | 1 | PC-Based Resin | 250 | 0.5 | 5 | 2 | Presence | A | B | B | B |
| Example 127 | C | Zn-Al-Mg Alloy-Plated Steel Sheet | 2 | PC-Based Resin | 250 | 0.5 | 5 | 2 | Presence | A | B | B | B |
| Example 128 | C | Zn-Al-Mg Alloy-Plated Steel Sheet | 4 | PC-Based Resin | 250 | 0.5 | 5 | 2 | Presence | A | B | B | B |
| Example 129 | C | Zn-Al-Mg Alloy-Plated Steel Sheet | 1 | PA-Based Resin | 250 | 0.5 | 10 | 3 | Presence | A | B | B | B |
| Example 130 | C | Zn-Al-Mg Alloy-Plated Steel Sheet | 2 | PA-Based Resin | 250 | 0.5 | 10 | 3 | Presence | A | B | B | B |
| Example 131 | C | Zn-Al-Mg Alloy-Plated Steel Sheet | 4 | PA-Based Resin | 250 | 0.5 | 10 | 3 | Presence | A | B | B | B |
| Example 132 | C | Zn-Al-Mg Alloy-Plated Steel Sheet | 4 | PC-Based Resin | 240 | 0.5 | 10 | 3 | Presence | A | B | B | B |
| Example 133 | C | Zn-Al-Mg Alloy-Plated Steel Sheet | 4 | PC-Based Resin | 290 | 0.5 | 20 | 4 | Presence | A | A | B | B |
| Example 134 | C | Zn-Al-Mg Alloy-Plated Steel Sheet | 4 | PC-Based Resin | 290 | 1.5 | 10 | 4 | Presence | A | A | B | B |
| Example 135 | C | Zn-Al-Mg Alloy-Plated Steel Sheet | 4 | PC-Based Resin | 290 | 1.5 | 20 | 4 | Presence | A | A | B | B |
| Example 136 | C | Zn-Al-Mg Alloy-Plated Steel Sheet | 4 | PC-Based Resin | 290 | 0.05 | 10 | 4 | Absence | A | B | B | B |
| Example 137 | C | Zn-Al-Mg Alloy-Plated Steel Sheet | 4 | PC-Based Resin | 290 | 0.5 | 5 | 3 | Presence | A | B | B | B |
| Example 138 | C | Zn-Al-Mg Alloy-Plated Steel Sheet | 4 | PC-Based Resin | 290 | 0.05 | 5 | 3 | Absence | A | B | B | B |

**[Table 1D]**

| No. | Film Resin | Steel Sheet Kind | Film Thickness (µm) | Thermoplastic Resin Composition | Thermocompression Bonding Conditions | | | Compatible Layer | Burrs | Peeling Strength | Peeling Strength After Immersion in Cooling Liquid | Cooling Water Leakage Resistance | |
|---|---|---|---|---|---|---|---|---|---|---|---|---|---|
| | | | | | Temperature (°C) | Pressure (MPa) | Time (sec) | Thickness Evaluation | Presence or Absence | | | | |
| | | | | | | | | | | | | 24 h | 1,000 h |
| Example 139 | D | Zn-Al-Mg Alloy-Plated Steel Sheet | 0.2 | PC-Based Resin | 250 | 0.5 | 10 | 3 | Presence | B | B | B | B |
| Example 140 | D | Zn-Al-Mg Alloy-Plated Steel Sheet | 1 | PC-Based Resin | 250 | 0.5 | 10 | 3 | Presence | A | B | B | B |
| Example 141 | D | Zn-Al-Mg Alloy-Plated Steel Sheet | 2 | PC-Based Resin | 250 | 0.5 | 10 | 3 | Presence | A | B | B | B |
| Example 142 | D | Zn-Al-Mg Alloy-Plated Steel Sheet | 4 | PC-Based Resin | 250 | 0.5 | 10 | 3 | Presence | A | B | B | B |
| Example 143 | D | Zn-Al-Mg Alloy-Plated Steel Sheet | 10 | PC-Based Resin | 250 | 0.5 | 10 | 3 | Presence | A | B | B | B |
| Example 144 | D | Zn-Al-Mg Alloy-Plated Steel Sheet | 15 | PC-Based Resin | 250 | 0.5 | 10 | 3 | Presence | A | B | B | B |
| Example 145 | D | Aluminum-Plated Steel Sheet | 0.2 | PC-Based Resin | 250 | 0.5 | 10 | 3 | Presence | B | B | B | B |
| Example 146 | D | Aluminum-Plated Steel Sheet | 1 | PC-Based Resin | 250 | 0.5 | 10 | 3 | Presence | A | B | B | B |
| Example 147 | D | Aluminum-Plated Steel Sheet | 2 | PC-Based Resin | 250 | 0.5 | 10 | 3 | Presence | A | B | B | B |
| Example 148 | D | Aluminum-Plated Steel Sheet | 4 | PC-Based Resin | 250 | 0.5 | 10 | 3 | Presence | A | B | B | B |
| Example 149 | D | Aluminum-Plated Steel Sheet | 10 | PC-Based Resin | 250 | 0.5 | 10 | 3 | Presence | A | B | B | B |
| Example 150 | D | Aluminum-Plated Steel Sheet | 15 | PC-Based Resin | 250 | 0.5 | 10 | 3 | Presence | A | B | B | B |
| Example 151 | D | Zn-Al-Mg Alloy-Plated Steel Sheet | 1 | PC-Based Resin | 290 | 0.5 | 10 | 4 | Presence | A | A | B | B |
| Example 152 | D | Zn-Al-Mg Alloy-Plated Steel Sheet | 2 | PC-Based Resin | 290 | 0.5 | 10 | 4 | Presence | A | A | B | B |
| Example 153 | D | Zn-Al-Mg Alloy-Plated Steel Sheet | 4 | PC-Based Resin | 290 | 0.5 | 10 | 4 | Presence | A | A | B | B |
| Example 154 | D | Zn-Al-Mg Alloy-Plated Steel Sheet | 1 | PC-Based Resin | 160 | 0.5 | 10 | 2 | Absence | B | B | B | B |
| Example 155 | D | Zn-Al-Mg Alloy-Plated Steel Sheet | 2 | PC-Based Resin | 160 | 0.5 | 10 | 2 | Absence | B | B | B | B |
| Example 156 | D | Zn-Al-Mg Alloy-Plated Steel Sheet | 4 | PC-Based Resin | 160 | 0.5 | 10 | 2 | Absence | B | B | B | B |
| Example 157 | D | Zn-Al-Mg Alloy-Plated Steel Sheet | 1 | PC-Based Resin | 250 | 1.5 | 10 | 3 | Presence | A | B | B | B |
| Example 158 | D | Zn-Al-Mg Alloy-Plated Steel Sheet | 2 | PC-Based Resin | 250 | 1.5 | 10 | 3 | Presence | A | B | B | B |
| Example 159 | D | Zn-Al-Mg Alloy-Plated Steel Sheet | 4 | PC-Based Resin | 250 | 1.5 | 10 | 3 | Presence | A | B | B | B |
| Example 160 | D | Zn-Al-Mg Alloy-Plated Steel Sheet | 1 | PC-Based Resin | 250 | 0.05 | 10 | 3 | Absence | A | B | B | B |
| Example 161 | D | Zn-Al-Mg Alloy-Plated Steel Sheet | 2 | PC-Based Resin | 250 | 0.05 | 10 | 3 | Absence | A | B | B | B |
| Example 162 | D | Zn-Al-Mg Alloy-Plated Steel Sheet | 4 | PC-Based Resin | 250 | 0.05 | 10 | 3 | Absence | A | B | B | B |
| Example 163 | D | Zn-Al-Mg Alloy-Plated Steel Sheet | 1 | PC-Based Resin | 160 | 1.5 | 10 | 2 | Absence | B | B | B | B |
| Example 164 | D | Zn-Al-Mg Alloy-Plated Steel Sheet | 2 | PC-Based Resin | 160 | 1.5 | 10 | 2 | Absence | B | B | B | B |
| Example 165 | D | Zn-Al-Mg Alloy-Plated Steel Sheet | 4 | PC-Based Resin | 160 | 1.5 | 10 | 2 | Absence | B | B | B | B |
| Example 166 | D | Zn-Al-Mg Alloy-Plated Steel Sheet | 1 | PC-Based Resin | 160 | 0.05 | 10 | 2 | Absence | B | B | B | B |
| Example 167 | D | Zn-Al-Mg Alloy-Plated Steel Sheet | 2 | PC-Based Resin | 160 | 0.05 | 10 | 2 | Absence | B | B | B | B |
| Example 168 | D | Zn-Al-Mg Alloy-Plated Steel Sheet | 4 | PC-Based Resin | 160 | 0.05 | 10 | 2 | Absence | B | B | B | B |
| Example 169 | D | Zn-Al-Mg Alloy-Plated Steel Sheet | 1 | PC-Based Resin | 250 | 0.5 | 20 | 4 | Presence | A | A | B | B |
| Example 170 | D | Zn-Al-Mg Alloy-Plated Steel Sheet | 2 | PC-Based Resin | 250 | 0.5 | 20 | 4 | Presence | A | A | B | B |
| Example 171 | D | Zn-Al-Mg Alloy-Plated Steel Sheet | 4 | PC-Based Resin | 250 | 0.5 | 20 | 4 | Presence | A | A | B | B |
| Example 172 | D | Zn-Al-Mg Alloy-Plated Steel Sheet | 1 | PC-Based Resin | 250 | 0.5 | 5 | 2 | Presence | A | B | B | B |
| Example 173 | D | Zn-Al-Mg Alloy-Plated Steel Sheet | 2 | PC-Based Resin | 250 | 0.5 | 5 | 2 | Presence | A | B | B | B |
| Example 174 | D | Zn-Al-Mg Alloy-Plated Steel Sheet | 4 | PC-Based Resin | 250 | 0.5 | 5 | 2 | Presence | A | B | B | B |
| Example 175 | D | Zn-Al-Mg Alloy-Plated Steel Sheet | 1 | PA-Based Resin | 250 | 0.5 | 10 | 3 | Presence | A | B | B | B |
| Example 176 | D | Zn-Al-Mg Alloy-Plated Steel Sheet | 2 | PA-Based Resin | 250 | 0.5 | 10 | 3 | Presence | A | B | B | B |
| Example 177 | D | Zn-Al-Mg Alloy-Plated Steel Sheet | 4 | PA-Based Resin | 250 | 0.5 | 10 | 3 | Presence | A | B | B | B |
| Example 178 | D | Zn-Al-Mg Alloy-Plated Steel Sheet | 4 | PC-Based Resin | 240 | 0.5 | 10 | 3 | Presence | A | B | B | B |
| Example 179 | D | Zn-Al-Mg Alloy-Plated Steel Sheet | 4 | PC-Based Resin | 290 | 0.5 | 20 | 4 | Presence | A | A | B | B |
| Example 180 | D | Zn-Al-Mg Alloy-Plated Steel Sheet | 4 | PC-Based Resin | 290 | 1.5 | 10 | 4 | Presence | A | A | B | B |
| Example 181 | D | Zn-Al-Mg Alloy-Plated Steel Sheet | 4 | PC-Based Resin | 290 | 1.5 | 20 | 4 | Presence | A | A | B | B |
| Example 182 | D | Zn-Al-Mg Alloy-Plated Steel Sheet | 4 | PC-Based Resin | 290 | 0.05 | 10 | 4 | Absence | A | B | B | B |
| Example 183 | D | Zn-Al-Mg Alloy-Plated Steel Sheet | 4 | PC-Based Resin | 290 | 0.5 | 5 | 3 | Presence | A | B | B | B |
| Example 184 | D | Zn-Al-Mg Alloy-Plated Steel Sheet | 4 | PC-Based Resin | 290 | 0.05 | 5 | 3 | Absence | A | B | B | B |

**[Table 1E]**

| No. | Film Resin | Steel Sheet Kind | Film Thickness (µm) | Thermoplastic Resin Composition | Thermocompression Bonding Conditions | | | Compatible Layer | Burrs | Peeling Strength | Peeling Strength After Immersion in Cooling Liquid | Cooling Water Leakage Resistance | |
|---|---|---|---|---|---|---|---|---|---|---|---|---|---|
| | | | | | Temperature (°C) | Pressure (MPa) | Time (sec) | Thickness Evaluation | Presence or Absence | | | | |
| | | | | | | | | | | | | 24 h | 1,000 h |
| Comparative Example 1 | A | Zn-Al-Mg Alloy-Plated Steel Sheet | 0.1 | PE-Based Resin | 160 | 0.5 | 10 | 1 | Presence | C | C | C | C |
| Comparative Example 2 | A | Aluminum-Plated Steel Sheet | 0.1 | PE-Based Resin | 160 | 0.5 | 10 | 1 | Presence | C | C | C | C |
| Comparative Example 3 | A | Zn-Al-Mg Alloy-Plated Steel Sheet | 4 | PE-Based Resin | 60 | 0.5 | 10 | 1 | Absence | C | C | C | C |
| Comparative Example 4 | A | Aluminum-Plated Steel Sheet | 4 | PE-Based Resin | 60 | 0.5 | 10 | 1 | Absence | C | C | C | C |
| Comparative Example 5 | B | Zn-Al-Mg Alloy-Plated Steel Sheet | 0.1 | PC-Based Resin | 250 | 0.5 | 10 | 1 | Presence | C | C | C | C |
| Comparative Example 6 | B | Aluminum-Plated Steel Sheet | 0.1 | PC-Based Resin | 250 | 0.5 | 10 | 1 | Presence | C | C | C | C |
| Comparative Example 7 | B | Zn-Al-Mg Alloy-Plated Steel Sheet | 4 | PC-Based Resin | 60 | 0.5 | 10 | 1 | Absence | C | C | C | C |
| Comparative Example 8 | B | Aluminum-Plated Steel Sheet | 4 | PC-Based Resin | 60 | 0.5 | 10 | 1 | Absence | C | C | C | C |
| Comparative Example 9 | C | Zn-Al-Mg Alloy-Plated Steel Sheet | 0.1 | PC-Based Resin | 250 | 0.5 | 10 | 1 | Presence | C | C | C | C |
| Comparative Example 10 | C | Aluminum-Plated Steel Sheet | 0.1 | PC-Based Resin | 250 | 0.5 | 10 | 1 | Presence | C | C | C | C |
| Comparative Example 11 | C | Zn-Al-Mg Alloy-Plated Steel Sheet | 4 | PC-Based Resin | 60 | 0.5 | 10 | 1 | Absence | C | C | C | C |
| Comparative Example 12 | C | Aluminum-Plated Steel Sheet | 4 | PC-Based Resin | 60 | 0.5 | 10 | 1 | Absence | C | C | C | C |
| Comparative Example 13 | D | Zn-Al-Mg Alloy-Plated Steel Sheet | 0.1 | PC-Based Resin | 250 | 0.5 | 10 | 1 | Presence | C | C | C | C |
| Comparative Example 14 | D | Aluminum-Plated Steel Sheet | 0.1 | PC-Based Resin | 250 | 0.5 | 10 | 1 | Presence | C | C | C | C |
| Comparative Example 15 | D | Zn-Al-Mg Alloy-Plated Steel Sheet | 4 | PC-Based Resin | 60 | 0.5 | 10 | 1 | Absence | C | C | C | C |
| Comparative Example 16 | D | Aluminum-Plated Steel Sheet | 4 | PC-Based Resin | 60 | 0.5 | 10 | 1 | Absence | C | C | C | C |

In Examples 1 to 184, since the coating film contained predetermined components, the film thickness (µm) of the coating film was in a predetermined range, and the steel sheet and the thermoplastic resin composition were in a predetermined combination, the adhesiveness between the steel sheet and the molded body of the thermoplastic resin composition was excellent.

Meanwhile, in Comparative Examples 1, 2, 5, 6, 9, 10, 13, and 14, since the film thickness of the coating film was less than 0.2 µm, the adhesiveness was poor. In Comparative Examples 3, 4, 7, 8, 11, 12, 15, and 16, since the heating temperature was low, no burrs were formed and the adhesiveness was poor.

A metal floor base material was produced with the steel sheet having a polypropylene layer or a polycarbonate unit-containing polyurethane layer and the thermoplastic resin composition, and cooling water was circulated to investigate cooling water leakage resistance.

### (1) Production of Cooling Floor Member

The steel sheet with a film layer formed thereon was cut into a length of 300 mm × a width of 400 mm, and then heated by electromagnetic induction heating, and a partition member obtained by cutting the thermoplastic resin composition into a shape similar to that of the partition member shown in FIG. 2B to obtain a channel width of 20 mm and a thickness of 3 mm was thermocompression-bonded thereto. Then, another produced steel sheet was cut into a length of 300 mm × a width of 400 mm. The steel sheet was then heated by electromagnetic induction heating and thermocompression-bonded to the thermoplastic resin composition subjected to the thermocompression bonding as above, and thus a cooling floor member was produced as shown in FIG. 2B. In a case where the thermoplastic resin composition was a polyethylene (PE)-based resin composition or a polypropylene (PP)-based resin composition, the steel sheet was heated to a temperature of 160°C and the thermocompression bonding was performed for 10 seconds. In a case where the thermoplastic resin composition was a polycarbonate (PC)-based resin composition or a polyamide (PA)-based resin composition, the steel sheet was heated to a temperature of 250°C and the thermocompression bonding was performed for 2 seconds. For the electromagnetic induction heating, a high frequency induction heating device (Pearl Industries, Ltd.) was used.

### (2) Evaluation of Cooling Water Leakage Resistance in Produced Cooling Floor Member

A cooling liquid was allowed to flow through the channel in the produced metal floor base material. As the cooling liquid, an aqueous solution obtained by diluting a long-life coolant KQ202-20018 (NISSAN MOTOR CO., LTD.) with water to 30 mass% was used. In addition, a hose, a pump, and a chiller were attached to the channel ends on both sides of the cooling floor base material to constitute a circulating path, and the cooling liquid was circulated in the circulating path. Here, the chiller was controlled so that the temperature of the cooling water was 25°C to 30°C. After 24 hours and 1,000 hours from the start of the cooling water circulation, the presence or absence of cooling water leakage from between the metal material and the partition member was investigated. A case where the cooling water did not leak was evaluated as "B", and a case where the cooling water leaked was evaluated as "C". "B" was evaluated as acceptable in cooling water leakage resistance. The results are shown in Tables 1A to 1E.

In Examples 1 to 184, since the film thickness (µm) of the coating film was in a predetermined range and the steel sheet and the thermoplastic resin composition were in a predetermined combination, the cooling water leakage resistance was excellent.

Meanwhile, in Comparative Examples 1, 2, 5, 6, 9, 10, 13, and 14, since the film thickness of the coating film was less than 0.2 µm, the cooling water leakage resistance was poor. In Comparative Examples 3, 4, 7, 8, 11, 12, 15, and 16, since the heating temperature was low, no burrs were formed and the adhesiveness was poor.

### [Brief Description of the Reference Symbols]

1: battery pack
2: upper cover
3: battery cell
4 lower cover (battery case)
100, 100A, 100B cooling floor member
101 metal floor base material
101a, 102a outer peripheral edge
102 flat sheet-like metal floor sheet
104 cooling liquid channel
105 partition member (insert)
106 thermoplastic resin composition
120 coating resin
130 joining portion
140 compatible layer
141 burrs
160 polypropylene layer
161 polycarbonate unit-containing polyurethane layer
200 battery case-integrated cooling channel

## Claims

1. A cooling floor member that cools a battery cell placed above, the cooling floor member comprising:
a metal floor base material;
a flat sheet-like metal floor sheet that is disposed to face the metal floor base material and has an outer surface in contact with the battery cell; and
a partition member that is disposed between the metal floor base material and the flat sheet-like metal floor sheet and is a thermoplastic resin composition,
wherein a region surrounded by the metal floor base material, the flat sheet-like metal floor sheet, and the partition member is a cooling liquid channel through which a cooling liquid flows,
the metal floor base material or the flat sheet-like metal floor sheet or a combination thereof has a polypropylene layer containing acid-modified polypropylene or a polycarbonate unit-containing polyurethane layer including a polycarbonate unit and polyurethane,
a film thickness of the polypropylene layer or the polycarbonate unit-containing polyurethane layer is 0.2 µm or more, and
the metal floor base material or the flat sheet-like metal floor sheet or a combination thereof is joined to the partition member via a compatible layer between the polypropylene layer or the polycarbonate unit-containing polyurethane layer and the thermoplastic resin composition.

2. The cooling floor member according to claim 1,
wherein the metal floor base material or the flat sheet-like metal floor sheet or a combination thereof has the polypropylene layer, and the partition member is any one of a polyethylene-based resin composition and a polypropylene-based resin composition.

3. The cooling floor member according to claim 1,
wherein the metal floor base material or the flat sheet-like metal floor sheet or a combination thereof has the polycarbonate unit-containing polyurethane layer, and the partition member is any one of an acrylonitrile-butadiene-styrene-based resin composition, a polyethylene terephthalate-based resin composition, a polycarbonate-based resin composition, a polyamide-based resin composition, a polyphenylene sulfide-based resin composition, a polyvinyl chloride-based resin composition, a methacrylic acid-based resin composition, and a polyacetal-based resin composition.

4. The cooling floor member according to any one of claims 1 to 3,
wherein an outer peripheral edge of the metal floor base material and an outer peripheral edge of the flat sheet-like metal floor sheet are directly and continuously joined to each other.

5. The cooling floor member according to any one of claims 1 to 3,
wherein the metal floor base material and the flat sheet-like metal floor sheet are steels.

6. The cooling floor member according to any one of claims 1 to 3,
wherein the metal floor base material and the flat sheet-like metal floor sheet are zinc-plated steel sheets or aluminum-plated steel sheets.

7. The cooling floor member according to any one of claims 1 to 3,
wherein a thickness of the compatible layer is 25 nm or more.

8. The cooling floor member according to any one of claims 1 to 3,
wherein an edge portion of the compatible layer has burrs.
